(19) Europäisches Patentamt / European Patent Office / Office européen des brevets

(11) EP 2 717 496 B1

(12) EUROPEAN PATENT SPECIFICATION

(45) Date of publication and mention of the grant of the patent:
05.10.2016 Bulletin 2016/40

(21) Application number: 12796867.5

(22) Date of filing: 12.06.2012

(51) Int Cl.:
H04B 10/077 (2013.01)     H04J 14/02 (2006.01)

(86) International application number:
PCT/CN2012/076740

(87) International publication number:
WO 2012/167754 (13.12.2012 Gazette 2012/50)

(54) **METHOD AND DEVICE FOR OBTAINING PERFORMANCE PARAMETERS OF OPTICAL NETWORK LINK**

VERFAHREN UND VORRICHTUNG ZUR GEWINNUNG VON LEISTUNGSPARAMETERN EINER OPTISCHEN NETZWERKVERKNÜPFUNG

PROCÉDÉ ET DISPOSITIF POUR OBTENIR DES PARAMÈTRES DE PERFORMANCE D'UNE LIAISON DE RÉSEAU OPTIQUE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 01.07.2011 CN 201110184200

(43) Date of publication of application:
09.04.2014 Bulletin 2014/15

(73) Proprietor: Huawei Technologies Co., Ltd.
Longgang District
Shenzhen, Guangdong 518129 (CN)

(72) Inventors:
• ZHANG, Sen
  Shenzhen
  Guangdong 518129 (CN)
• HAN, Jianrui
  Shenzhen
  Guangdong 518129 (CN)
• ZHOU, Enbo
  Shenzhen
  Guangdong 518129 (CN)

(74) Representative: Epping - Hermann - Fischer
Patentanwaltsgesellschaft mbH
Schloßschmidstraße 5
80639 München (DE)

(56) References cited:
CN-A- 102 045 114     CN-A- 102 299 738
US-A1- 2002 114 062     US-A1- 2004 052 526
US-A1- 2007 002 430     US-A1- 2009 214 204
US-B1- 7 769 302

• ELREFAIE A F ET AL: "FIBER-AMPLIFIER CASCADES WITH GAIN EQUALIZATION IN MULTIWAVELENGTH UNIDIRECTIONAL INTER-OFFICE RING NETWORKS", IEEE PHOTONICS TECHNOLOGY LETTERS, IEEE SERVICE CENTER, PISCATAWAY, NJ, US, vol. 5, no. 9, 1 September 1993 (1993-09-01), pages 1026-1028, XP000414170, ISSN: 1041-1135, DOI: 10.1109/68.257180

**Description**

**TECHNICAL FIELD**

The present invention relates to optical network technologies, and in particular, to a method and an apparatus for obtaining a performance parameter of an optical network link.

**BACKGROUND**

An intelligent optical network with a typical representative being an automatically switched optical network (Automatically Switched Optical Networks, ASON) separates a control layer plane from a network management system, thereby introducing a part of automatic control function to the intelligent optical network, and implementing automatic connection management.

For example, in a certain optical network link system adopting a dense wavelength division multiplexing technology (DWDM), two optical multiplexer sections (Optical Multiplexer Section Layer, OMS) are included in total, where a first OMS is from a transmitting end (Tx) to a WSS1, a second OMS is from a WSS2 to a receiving end (Rx), each OMS includes multiple spans, and each span includes an erbium-doped fiber amplifier (Erbium-doped Fiber Amplifier, EDFA), a fiber and an attenuator. A signal of the transmitting end (Tx) is received by a receiver of the receiving end (Rx) after being transmitted by multiple amplifiers, optical wavelength selective switches (Wavelength Selective Switch, WSS), attenuators and fibers.

In order to obtain power and an OSNR of each wavelength signal at any point of a link, in the prior art, a theoretical model is merely adopted for calculation. For example, when a signal is transmitted in the fiber, a stimulated raman scattering (Stimulated Raman Scattering, SRS) model is used for calculation; when a signal is transmitted in the EDFA, an EDFA model is used for calculation after the network management queries a gain set by the amplifier; when a signal is transmitted in the attenuator, a set attenuation is queried through the network management; and when a signal is transmitted in the WSS, a set attenuation is queried through the network management.

In the prior art, during a process of obtaining performance of the link through calculation with the model, at least the following disadvantages exist: Because some parameters in the link, such as a fixed insertion loss of a WSS component and a VOA component, a wavelength dependent loss (Wavelength Dependent Loss, WDL) property of a component, and a control accuracy error of the EDFA, cannot be accurately acquired, an input parameter of a calculation result of the theoretical model is inaccurate, and a large deviation usually exists between a result obtained through calculation with the theoretical model and an actually measured result in an engineering application.

US 2004052526 A1 discloses an agile network which is provided with a layered control system for maintaining a network-wide target performance parameter (e.g. power) along all end-to-end connections. A connection is controlled at the physical layer using optical control loops that have a concatenated response based on a set of loop time constants. The network is separated into gain based span loops and power based switch loops; each link has a gain profile, and requires a per-wavelength power target as the output power target for the switch loop at the start of the link. Use of achievable gain for the span loops allow to optimize the performance of the link. Use of individual achievable power targets allows each switch loop to autonomously ramp on and off channels without causing interference with existing and other ramping channels. A loop control uses a model-based rules block, to distribute control signals to an optical section encompassing a plurality of optical components. Results from a set of tests performed during link commissioning are used as parameters for the expert system. After examining the current status of the entire optical section and collecting a set of measurements, the rules block determines the best way to achieve the target, whilst maximizing performance.

US 2009214204 A1 discloses a method for monitoring an optical network. The method provides received network data to a network model, which determines if there is an inconsistency within the optical network. The network models include a statistical model and a detailed-physical model, both of which model amplifier physics.

US 2002114062 A1 discloses a performance monitoring method for an optically amplified transmission system. The method provides the optical power at each amplifier site, taking into account the inaccuracies introduced by the SRS in the power estimation obtained with the current methods. An optical spectrum analyzer is used at the output of the transmission link of interest to accurately measure the output power of each wavelength. This value is sent upstream to the last amplifier in the link, to compute an error term as the difference between the actual measurement and the estimation. The error term is used to infer the SRS-induced error by system elements not accounted for in the model. The error term is then fed-back to each amplifier in the link, so that the estimated power is adjusted to account for the SRS-induced inaccuracy.

**SUMMARY**

Embodiments of the present invention propose a method and an apparatus for obtaining a performance parameter of an optical network link, so as to improve accuracy of a performance parameter of an optical network given through a theoretical model.

An embodiment of the present invention provides a method for obtaining a performance parameter of an optical network link, where the method includes:

acquiring actual optical power from each monitoring point of an optical network link by measuring;
correspondingly acquiring theoretical optical power of each monitoring point calculated by using a theoretical model;
performing modification on at least one parameter of an amplifier gain and a link loss of the optical network link in the theoretical model by using the actual optical power and the corresponding theoretical optical power of each monitoring point; and
obtaining a performance parameter value of each node in the optical network link from the modified theoretical model;

wherein the performing modification on at least one parameter of an amplifier gain and a link loss of the optical network link in the theoretical model by using the actual optical power and the corresponding theoretical optical power of each monitoring point comprises:

subtracting corresponding theoretical single-wave output optical power calculated by using the theoretical model from actual single-wave output optical power of an erbium-doped fiber amplifier, EDFA, monitored by an optical performance monitor, OPM, to obtain a difference value between actual output optical power and theoretical output optical power of each single wave;
comparing a difference value between actual optical power and theoretical optical power of each single wave with a preset threshold;
in a case that at least one of difference values is greater than the threshold, modifying theoretical single-wave input optical power of the EDFA in the theoretical model; and
using the modified theoretical single-wave input optical power of the EDFA to modify a link loss of a transmitting end of the optical network link in the theoretical model, wherein the link loss of a transmitting end is a link loss between a laser in the transmitting end and the EDFA.

An embodiment of the present invention further provides an apparatus for obtaining a performance parameter of an optical network link, where the apparatus includes:

an actual value acquiring unit, configured to acquire actual optical power from each monitoring point of an optical network link by measuring;

a theoretical value acquiring unit, configured to correspondingly acquire theoretical optical power of each monitoring point calculated with a theoretical model by using a theoretical model;
a modification unit, configured to perform modification on at least one parameter of an amplifier gain and a link loss of the optical network link in the theoretical model by using the actual optical power and the corresponding theoretical optical power of each monitoring point; and
a performance parameter acquiring unit, configured to obtain a performance parameter value of each node in the optical network link from the modified theoretical model.

wherein the modification unit comprises:

a second subtraction subunit, configured to subtract corresponding theoretical single-wave output optical power calculated by using the theoretical model from actual single-wave output optical power of an erbium-doped fiber amplifier, EDFA, monitored by an optical performance monitor, OPM, to obtain a difference value between actual output optical power and theoretical output optical power of each single wave;
a second comparison subunit, configured to compare a difference value between actual optical power and theoretical optical power of each single wave with a preset threshold;
a fourth modification subunit, configured to: in a case that at least one of difference values is greater than the threshold, modify theoretical single-wave input optical power of the EDFA in the theoretical model; and
a loss modification subunit, configured to use the modified theoretical single-wave input optical power of the EDFA to modify a link loss of a transmitting end of the optical network link in the theoretical model, wherein the link loss of a transmitting end is a link loss between a laser in the transmitting end and the EDFA.

In the method and the apparatus for obtaining a performance parameter of an optical network link according to the embodiments of the present invention, monitored actual optical power and theoretical optical power are acquired;

modification is performed on a theoretical model by using the actual optical power and the theoretical optical power; and a performance parameter value in each node of the optical network is obtained from the modified theoretical model, so that a performance parameter given through the theoretical model is more accurate, thereby solving a problem in the prior art that a large deviation exists between a performance parameter calculated with the theoretical model and an actually measured result, and improving accuracy of the performance parameter given through the theoretical model.

## BRIEF DESCRIPTION OF DRAWINGS

To describe the technical solutions in the embodiments of the present invention more clearly, accompanying drawings for describing the embodiments are introduced briefly in the following. Apparently, the accompanying drawings in the following description are only some embodiments of the present invention, and persons of ordinary skill in the art may further obtain other drawings according to these accompanying drawings without creative efforts.

FIG. 1 is a flow chart of a method for obtaining a performance parameter of an optical network link according to an embodiment of the present invention;
FIG. 2 is a schematic diagram of a signal power spectrum of a random node in a link in a method for obtaining a performance parameter of an optical network link according to an embodiment of the present invention;
FIG. 3 and FIG. 4 are schematic diagrams of optical network links to which a method for obtaining a performance parameter of an optical network link according to an embodiment of the present invention is applied;
FIG 5 is a flow chart of a method for obtaining a performance parameter of an optical network link according to an embodiment of the present invention which is specifically applied in modification of a theoretical model of an optical network link shown in FIG. 4;
FIG. 6 is another flow chart of a method for obtaining a performance parameter of an optical network link according to an embodiment of the present invention which is specifically applied in modification of a theoretical model of the optical network link shown in FIG. 4;
FIG. 7 is a schematic diagram of an error between a result which is output by an EDFA3 and calculated with a theoretical model and a result monitored by an OPM2 in a method for obtaining a performance parameter of an optical network link according to an embodiment of the present invention; and
FIG. 8 is a schematic structural diagram of an apparatus for obtaining a performance parameter of an optical network link according to an embodiment of the present invention.

## DESCRIPTION OF EMBODIMENTS

The technical solutions in the embodiments of the present invention are clearly and completely described in the following with reference to the accompanying drawings in the embodiments of the present invention. Obviously, the embodiments to be described are only a part rather than all of the embodiments of the present invention. All other embodiments obtained by persons skilled in the art based on the embodiments of the present invention without creative efforts shall fall within the protection scope of the present invention.

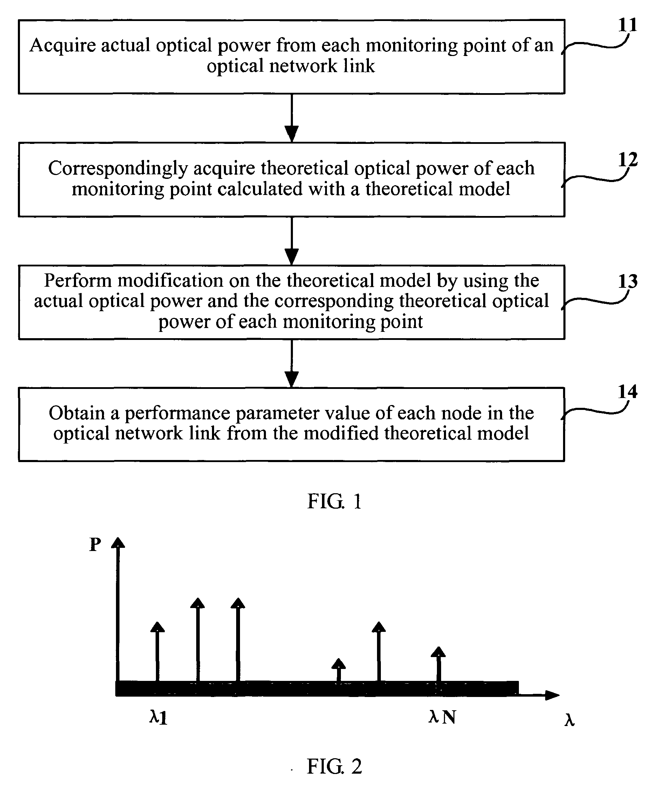

FIG. 1 is a flow chart of a method for obtaining a performance parameter of an optical network link according to an embodiment of the present invention. As shown in FIG. 1, the method includes:

Step 11: Acquire actual optical power from each monitoring point of an optical network link.

Generally, in some sites of the link, an optical performance monitor (Optical Performance Monitor, OPM) module is configured, especially, before and after a reconfigurable optical add/drop multiplexer (Reconfigurable Optical Add/Drop Multiplexer, ROADM), to monitor optical power of each single wave.

In order to obtain the performance parameter of the link to perform estimation on link performance, an OPM is configured at a transmitting end (namely at a first amplifier) and a receiving end (namely at a last amplifier) of each OMS for monitoring, and in consideration of the cost of the OPM module, in an engineering application, an OPM module is not placed at a position of every amplifier to monitor optical power. However, when the link performance, such as a transmission cost, is obtained, incident optical power of each single wave at each span, namely output optical power which is of each single wave and is output by an amplifier, needs to be known, and an OSNR of optical signals at some points of the link also needs to be known.

A monitoring apparatus at a monitoring point may be an EDFA and may also be an OPM, and may also be another monitoring device or meter. Optical power may be single-wave optical power and may also be multiplexed wave optical power. Actual multiplexed wave optical power is monitored by the EDFA, and actual single-wave optical power is monitored by the OPM.

Assume that an optical signal with N wavelengths exists in the link, a signal power spectrum at a random node of the link may be shown in FIG. 2. The gray part represents amplified spontaneous emission (amplified spontaneous emission, ASE) noise accumulated in the link. The multiplexed wave optical power $P_{\text{total}}$ (mw) of the optical signal at this point may be represented by a sum of power $P_{\lambda i}$ (mw) of single waves adding power $P_{ASE}$ (mw) of the ASE, namely

$$P_{\text{total}} = \sum_{i=1}^{N} P_{\lambda i} + P_{ASE}$$

A theoretical value of $P_{\text{total}}$ may be obtained through calculation with a theoretical model, and an actual value of $P_{\text{total}}$ may also be obtained through the monitoring point.

In this step, the actual value is obtained through the monitoring point, for example, the actual multiplexed wave optical power monitored by the EDFA is obtained from each EDFA in the optical network link; or the actual single-wave optical power monitored by the OPM is obtained from an OPM set at a part of EDFAs of the optical network link, and the actual multiplexed wave optical power monitored by the EDFA is obtained from the other EDFAs; or the actual single-wave optical power monitored by the OPM is obtained from the OPM in each EDFA in the optical network link; or actual multiplexed wave optical power or actual single-wave optical power monitored by the monitoring device or meter is obtained from each node in the optical network link. The actual single-wave optical power may be input and output actual single-wave optical power of the amplifier, namely actual single-wave input and output optical power, and the actual multiplexed wave optical power is actual total input and output optical power.

Step 12: Correspondingly acquire theoretical optical power of each monitoring point calculated with a theoretical model. For example, when the EDFA itself can monitor the actual optical power, acquire theoretical optical power of this EDFA calculated with the theoretical model. When the OPM monitors the actual optical power of an EDFA, acquire theoretical optical power of this EDFA calculated with the theoretical model. The theoretical optical power may be input and output single-wave theoretical optical power, and may also be theoretical total input/output optical power.

Step 13: Perform modification on at least one parameter of an amplifier gain and a link loss of the optical network link in the theoretical model by using the actual optical power and the corresponding theoretical optical power of each monitoring point, which may specifically include:

   using actual total input optical power of the first amplifier in the optical network link to modify theoretical single-wave input optical power of the first amplifier; and
   using the modified theoretical single-wave input optical power to modify a link loss of a transmitting end of the optical network link in the theoretical model.

Or the step may include:

   subtracting theoretical total output optical power calculated with the theoretical model from actual total output optical power of the EDFA monitored by the EDFA, to obtain a difference value;
   adding the difference value to the theoretical output optical power, to obtain modified theoretical total output optical power;
   obtaining a modified gain of the EDFA by using theoretical total input optical power of the EDFA and the modified theoretical total output optical power; and
   replacing an original gain of the EDFA in the theoretical model with the modified gain.

Or the step may include:

   comparing actual total input optical power monitored by the EDFA with theoretical total input optical power calculated with the theoretical model; and
   in a case that the actual total input optical power and the theoretical total input optical power are inconsistent, performing modification on the theoretical total input optical power, and using the modified theoretical total input optical power and theoretical total output optical power modified by a previous EDFA to perform modification on a VOA loss or a loss of a span component between the EDFA and the previous EDFA in the theoretical model.

Or the step may include:

   subtracting actual total input optical power monitored by the EDFA from a sum of actual single-wave output optical power of the EDFA monitored by the OPM, to obtain a total gain of the EDFA; and
   replacing a total gain of the EDFA in the theoretical model with the obtained total gain.

Or the step may include:

subtracting corresponding theoretical single-wave output optical power calculated with the theoretical model from actual single-wave output optical power of the EDFA monitored by the OPM, to obtain a difference value between actual output optical power and theoretical output optical power of each single wave;
comparing the difference value between the actual optical power and the theoretical optical power of each single wave with a preset threshold;
in a case that at least one of difference values is greater than the threshold, modifying theoretical single-wave input optical power of the EDFA in the theoretical model; and
using the modified theoretical single-wave input optical power of the EDFA to modify a link loss of a transmitting end of the optical network link in the theoretical model.

Further, step 13 may also include:

allocating the difference value between the actual output optical power and the theoretical output optical power of each single wave to each span of an optical multiplexer section where the OPM is located in an average manner or a weighted average manner, so as to correspondingly modify a link loss of each span in the theoretical model; and
using the modified theoretical model to recalculate the theoretical output optical power of each single wave, so as to obtain a new difference value between the actual output optical power and the theoretical output optical power of each single wave, until the difference value is smaller than the threshold.

Or the step may include:

subtracting theoretical total output optical power obtained through the theoretical model from a sum of actual single-wave output optical power monitored by a last OPM in an optical multiplexer section where the OPM is located, to obtain a multiplexed wave difference value;
using the multiplexed wave difference value to perform modification on a gain of an EDFA of the optical multiplexer section where the OPM is located in an average manner or a weighted average manner;
subtracting theoretical single-wave output optical power calculated with the theoretical model from the actual single-wave output optical power monitored by the last OPM, to obtain a single-wave difference value;
subtracting the single-wave difference value from the multiplexed wave difference value, to obtain a deviation value;
comparing the deviation value with a preset threshold; and
in a case that the deviation value is greater than the threshold, using the deviation value to modify a link loss in the optical multiplexer section where the OPM is located in an average manner or a weighted average manner, until the deviation value is smaller than the threshold.

Step 14: Obtain a performance parameter value of each node in the optical network link from the modified theoretical model. After at least one parameter of the link loss and the gain of the amplifier, such as the EDFA, in the theoretical model is modified in the foregoing step 13, a deviation between a performance parameter of an optical network calculated with the modified theoretical model, such as theoretical optical power of each node, and the actual optical power is quite small, and the OSNR is more accurate, thereby improving accuracy of a result calculated with the theoretical model of the optical network link and enabling a link performance parameter obtained through the theoretical model to be more accurate.

In the technical solution according to this embodiment, a corresponding parameter in a theoretical model is modified according to actual single-wave output optical power monitored by an OPM and/or actual multiplexed wave optical power monitored by an EDFA, so as to reduce accumulation of errors in a calculation process of the theoretical model as much as possible, thereby ensuring accuracy of a result calculated with a link model.

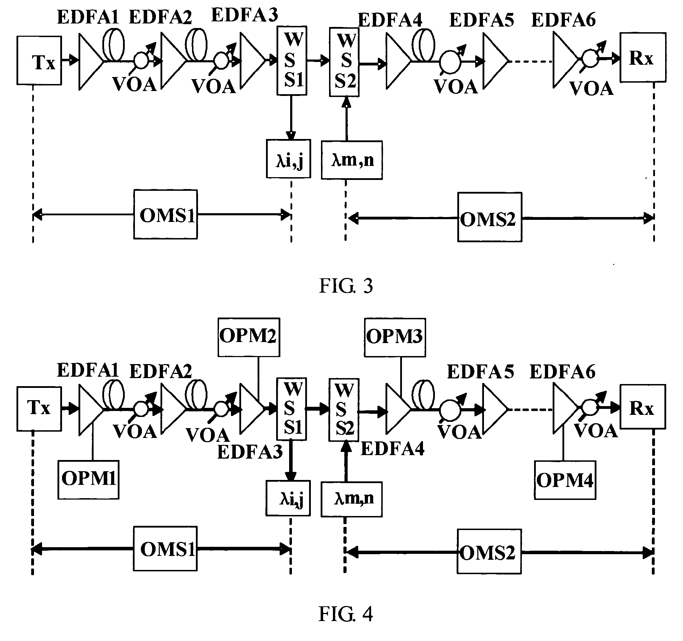

The following further describes a method for obtaining a performance parameter of an optical network link by taking optical network links shown in FIG. 3 and FIG. 4 as examples.

There is no OPM in the optical network link shown in FIG. 3, and monitoring functions at all EDFA nodes are executed by EDFAs.

Power of each wavelength at a transmitting end Tx of an OMS1, namely theoretical single-wave input optical power of an EDFA1, is modified according to actual total input optical power monitored by the EDFA1. Specifically, difference values between theoretical total input optical power calculated with a theoretical model and the actual total input optical power monitored by the EDFA1 are averaged, to obtain an average value of the difference values; and the theoretical single-wave input optical power of the EDFA1 and the average value of the difference values are added together, to obtain the modified theoretical single-wave input optical power. If light emitted by a laser in the transmitting end reaches the EDFA1 after passing through a series of components or a quite long fiber, a more accurate loss between the laser and the EDFA1 may be obtained by using the modified theoretical single-wave input optical power; and the obtained loss is used to modify a loss of the transmitting end of the optical network link in the theoretical model, so that theoretical input optical power of the EDFA1 calculated with the theoretical model is more accurate. Because the light directly emitted by the laser in the transmitting end does not pass through the EDFA1, an OSNR of an input signal of the EDFA1 is infinitely great. The OSNR may be obtained when signal power and ASE power are obtained through calculation, and

$$OSNR = \frac{\text{signal power}}{\text{noise power}}$$

Specifically, the theoretical input optical power of the EDFA1 is obtained through calculation with an EDFA model.

Theoretical single-wave output optical power of the EDFA1 is obtained through calculation with the EDFA model, and the theoretical single-wave output optical power of the EDFA1, that is, a theoretical output optical power spectrum in the EDFA1, is modified according to actual total output optical power monitored by the EDFA1. Specifically, assume that the theoretical single-wave output optical power of the EDFA1 obtained through calculation is $P_{\lambda ko}$ (dBm); $P_{ASEo}$ (dBm) is obtained through calculation; the actual total output optical power monitored by the EDFA1, namely actual multiplexed wave optical power, is $P_{ototal}$ (dBm); and N represents that a signal with N wavelengths is put into the EDFA model, and the theoretical single-wave output optical power and the ASE optical power calculated with the modified theoretical model are:

$$\Delta = P_{ototal} - 10 * \log 10 (\sum_{k=1}^{N} 10^{0.1 * P_{\lambda ko}} + 10^{0.1 * P_{ASEo}})$$

$$P_{\lambda ko}' = P_{\lambda ko} + \Delta$$

$$P_{ASE}' = P_{ASEo} + \Delta$$

Theoretical single-wave input optical power and theoretical single-wave output optical power of each EDFA calculated with the theoretical model are modified according to the foregoing method. Correspondingly, a gain of each EDFA in the theoretical model is modified by using the modified theoretical single-wave input optical power and the modified theoretical single-wave output optical power. Specifically, a more accurate gain is obtained through calculation by using the modified theoretical single-wave input optical power and the modified theoretical single-wave output optical power, and a corresponding gain in the theoretical model is replaced with the obtained gain. The rest may be deduced by analogy, single-wave optical power and an OSNR in the tail end of the link are calculated, and therefore, an accurate link performance parameter of each node may be calculated by using the modified theoretical model, and performance of the link can be estimated according to the link performance parameter, such as optical power, of each node.

A VOA loss from the EDFA1 to an EDFA2 is modified by adopting the foregoing similar method. Specifically, theoretical single-wave input optical power of the EDFA2 may be calculated by using an SRS model; a result calculated with the model is modified according to actual total input optical power monitored by the EDFA2, to obtain the modified theoretical single-wave input optical power of the EDFA2, namely a modified theoretical input power spectrum of the EDFA2. A deviation between the modified theoretical input power spectrum of the EDFA2 and an actual input power spectrum of the EDFA2 is quite small, then the modified theoretical input power spectrum of the EDFA2 may be considered to be accurate, and because the theoretical output optical power of the EDFA1 has been modified, an accurate link loss from the EDFA1 to the EDFA2, including the VOA loss, may be obtained according to the modified theoretical input power spectrum of the EDFA2 and the modified theoretical output optical power of the EDFA1. The obtained link loss is used to modify a corresponding link loss in the theoretical model, including a VOA loss value, that is, to update a corresponding link loss value in the theoretical model to the foregoing obtained link loss, and therefore, accurate theoretical input optical power of the EDFA2 may be calculated by using the modified theoretical model.

For a fixed insertion loss of a component in the link, such as a VOA and a WSS, a typical value may be used to calculate theoretical optical power, and because an attenuation value set by the WSS for each wavelength may be obtained through querying a device, theoretical single-wave input optical power of an EDFA4 calculated with the theoretical model is equal to a value obtained by subtracting the fixed insertion loss of the VOA component and WSS component and attenuation values set by the VOA component and WSS component for the single wave from theoretical single-wave output optical power of an EDFA3 calculated with the theoretical model.

For theoretical input and output optical power of the EDFA4 shown in FIG. 3, an ideal step of calculation with the ideal theoretical model is that the theoretical single-wave input optical power of the EDFA4 is obtained by subtracting losses of a WSS1 and a WSS2 from the theoretical single-wave output optical power of the EDFA3. When a deviation between the losses of the WSS1 and the WSS2 in the theoretical model and actual losses of the WSS1 and the WSS2 is quite large, theoretical total input optical power of the EDFA4 calculated with the theoretical model is not equal to actual total input optical power of the EDFA4 monitored by the EDFA4, and therefore, fixed insertion losses of the WSS1 and the WSS2 in the theoretical model need to be modified. Specifically, a calculation result of power of the WSS between the two amplifiers can be modified according to actual total output optical power monitored by the EDFA3 and the actual total input optical power monitored by the EDFA4, and the calculation result of the power of the WSS between the two amplifiers can also be modified only according to the actual total input optical power monitored by the EDFA4. Assume that an output of the EDFA3 has 3 wavelengths, namely $\lambda_1$ $\lambda_2$, and $\lambda_3$. Theoretical output optical power of the EDFA3 calculated with the theoretical model is 1 dBm, 2 dBm, and 3 dBm respectively. Theoretical output ASE power is -10 dBm. In the theoretical model, typical values of fixed insertion losses of the WSS1 and the WSS2 for all wavelengths are set to 5 dB. Attenuations set by the WSS1 for $\lambda_1$, $\lambda_2$, and $\lambda_3$ are 1 dB, 2 dB, and 3 dB respectively. Attenuations set by the WSS2 for $\lambda_1$, $\lambda_2$, and $\lambda_3$ are 1 dB, 2 dB, and 3 dB respectively. Losses of the WSS1 and the WSS2 for ASE are set to 0. Therefore, the theoretical single-wave input optical power of the EDFA4 and the theoretical ASE optical power calculated with the theoretical model are:

$$P_{in1} = 1 - 5*2 - 1 - 1 = -11 dBm$$

$$P_{in2} = 2 - 5*2 - 2 - 2 = -12 dBm$$

$$P_{in3} = 3 - 5*2 - 3 - 3 = -13 dBm$$

$$P_{ASE} = -10 - 5*2 = -20 dBm$$

The theoretical total input optical power of the EDFA4 calculated with the theoretical model is:

$$P_{int\,otal} = 10*\log 10(10^{0.1*P_{in1}} + 10^{0.1*P_{in2}} + 10^{0.1*P_{in3}} + 10^{0.1*P_{ASE}}) = -6.93 dBm$$

Assume that the actual total input optical power monitored by the EDFA4 is -6 dBm, and if the fixed insertion loss of the WSS in the theoretical model is modified to 4.535 dB, the modified theoretical single-wave input optical power and theoretical ASE optical power are:

$$P_{in1} = 1 - 4.535*2 - 1 - 1 = -10.07 dBm$$

$$P_{in2} = 2 - 4.535*2 - 2 - 2 = -11.07 dBm$$

$$P_{in3} = 3 - 4.535*2 - 3 - 3 = -12.07 dBm$$

$$P_{ASE} = -10 - 4.5.5*2 = -19.07 dBm$$

The theoretical total input optical power of the EDFA4 calculated with the modified theoretical model is:

$$P_{int\,otal} = 10*\log 10(10^{0.1*P_{in1}} + 10^{0.1*P_{in2}} + 10^{0.1*P_{in3}} + 10^{0.1*P_{ASE}}) = -6 dBm$$

After the fixed insertion losses of the WSS1 and the WSS2 in the theoretical model are modified once, the modified theoretical model is used to calculate the theoretical single-wave output optical power of the EDFA3 as a start, until theoretical input optical power of the EDFA4 of each single wave is calculated, thereby obtaining a more accurate performance parameter in each node of the optical network link.

Persons skilled in the art should understand that a modification method is not limited to the calculation method given in the foregoing embodiment, as long as the theoretical total input optical power of the EDFA4 calculated with the theoretical model is closer to the actual total input optical power of the EDFA4 monitored by the EDFA4 after the fixed insertion losses of the WSS1 and the WSS2 in the theoretical model are modified.

In addition, after passing through the WSS, the OSNR does not change, so no modification is performed. Only after passing through the amplifier, the OSNR changes, because the amplifier generates new noise. However, if the OSNR only passes through an attenuation component, the signal and the noise power (ASE) are attenuated together, so the ratio (OSNR) between the signal and the noise does not change.

The rest may be deduced by analogy. Theoretical output optical power of an EDFA6 of each single wave (may also be called theoretical single-wave output optical power, which is the same in the following) may be calculated. A gain of the EDFA6 in the theoretical model is modified according to actual total output optical power monitored by the EDFA6, and therefore, theoretical output optical power of the EDFA6 of each single wave (may also be called theoretical single-wave output optical power, which is the same in the following) close to an actual value is calculated by using the modified theoretical model, and an accurate performance parameter of each node in the link, such as optical power and OSNR, may be obtained.

There is an OPM in the optical network link shown in FIG. 4, and actual input and output optical power of an EDFA in the link may be monitored by the OPM and may also be monitored by the EDFA.

When the EDFA is used for monitoring, the method in the embodiment shown in FIG. 3 may be adopted for modification, to obtain an accurate link performance parameter. A result calculated with a theoretical model may also be modified according to actual power of each single wave monitored by the OPM, and a parameter in the theoretical model is modified, and therefore, a theoretical value calculated with the theoretical model is close to an actual value, and the theoretical value calculated with the theoretical model is more accurate.

For example, actual single-wave output optical power monitored by an OPM1 is used to modify input theoretical optical power of an EDFA1 of each single wave calculated with the theoretical model. Because light directly emitted by a laser of a transmitting end does not pass through any EDFA, an input optical OSNR of the EDFA1 is infinitely great. Theoretical single-wave output optical power of the EDFA1 calculated with an EDFA theoretical model includes output optical power of each wave and noise power. Whether a difference value between the theoretical single-wave output optical power of the EDFA1 calculated with the theoretical model and the actual single-wave output optical power monitored by the OPM1 is smaller than a set threshold is determined through comparison. If the different value is not smaller than the set threshold, the theoretical single-wave input optical power is recalculated. If the difference value is smaller than the threshold, the theoretical output optical power of the EDFA1 calculated with the theoretical model which is close to the actual value, namely the accurate theoretical output optical power is obtained.

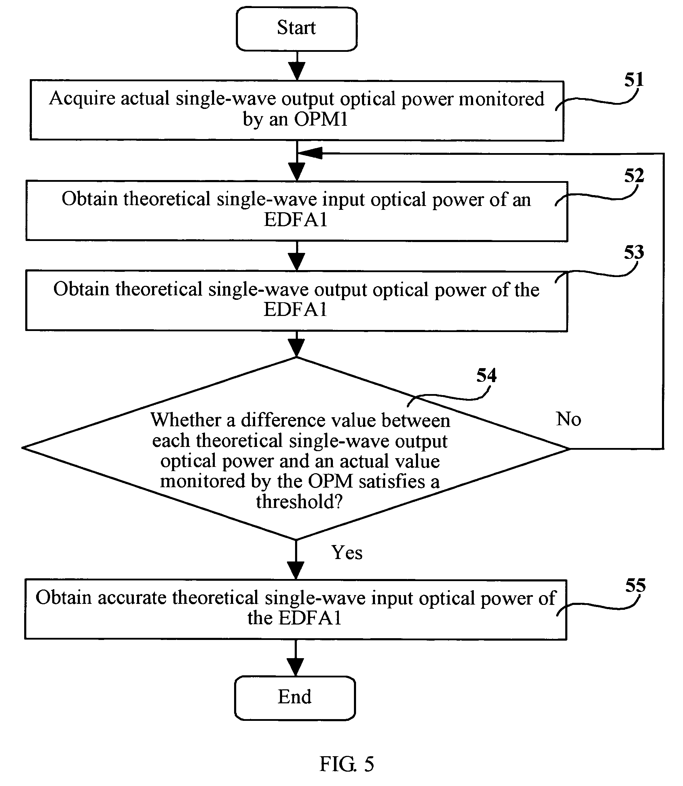

Specifically, as shown in FIG. 5, the following steps are included.

Step 51: Acquire actual single-wave output optical power monitored by an OPM1.

Step 52: Obtain theoretical single-wave input optical power $P_{\lambda ki}^{n}$ of an EDFA1. $\lambda_k$ represents a $k^{th}$ wavelength; i represents input (input); n represents an $n^{th}$ calculation result; n=0 represents an initial calculation value; n=1 represents the calculation value modified once; and the rest may be deduced by analogy. In an initial stage, initial theoretical single-wave input optical power $P_{\lambda ki}^{0}$ of the EDFA1 is obtained by subtracting a preset total gain of the EDFA1 in a theoretical model from the actual single-wave output optical power monitored by the OPM1. Here, if there is actual total input optical power monitored by the EDFA1, an accurate total gain of the EDFA1 is obtained by subtracting the actual total input optical power monitored by the EDFA1 from a sum of actual single-wave output optical power monitored by the OPM1, so that the obtained total gain is used to modify the total gain of the EDFA1 in the theoretical model.

Step 53: Obtain theoretical single-wave output optical power $P_{\lambda ko}^{n}$ of the EDFA1, where $P_{\lambda ko}$ represents theoretical single-wave output optical power of the $k^{th}$ wavelength. The description of n is the same as that in step 52, and an initial value is 0. In the initial stage, $P_{\lambda ki}^{0}$ is input to the theoretical model of the EDFA1, to calculate initial theoretical single-wave output optical power $P_{\lambda ko}^{0}$ of the EDFA1.

Step 54: Compare $P_{\lambda ko}^{n}$ with an actual value monitored by the OPM, so as to determine whether a difference value between the two satisfies a threshold. In the initial stage, perform comparison to determine whether a difference

value between $P_{\lambda ko}^0$ and the actual single-wave output optical power $P_{\lambda ko}^{opm}$ monitored by the OPM satisfies the threshold, that is, whether the difference value is smaller than the threshold. If yes, perform step 55; otherwise, add 1 to n and then perform step 52.

The difference value between $P_{\lambda ko}^0$ and the actual single-wave output optical power $P_{\lambda ko}^{opm}$ monitored by the OPM is:

$$\Delta P_{\lambda k}^1 = P_{\lambda ko}^0 - P_{\lambda ko}^{opm}$$

Step 55: Obtain accurate theoretical single-wave input optical power of the EDFA1.

Specifically, the theoretical single-wave input optical power of the EDFA1 is modified according to the difference value in step 54:

$$P_{\lambda ki}^1 = P_{\lambda ki}^0 - \Delta P_{\lambda k}^1$$

After the modified $P_{\lambda ki}^1$ is taken as the theoretical single-wave input optical power of the theoretical model of the EDFA1, an EDFA model is used to calculate the theoretical single-wave output optical power of the EDFA1. The difference value between the theoretical single-wave output optical power and the actual single-wave output optical power $P_{\lambda ko}^{opm}$ monitored by the OPM1 is calculated.

In step 54, if calculated difference values between single waves are all smaller than the set threshold, stop circulation and perform step 55; otherwise, continue to calculate $\Delta P_{\lambda k}^2$, $P_{\lambda ki}^2$, ..., $P_{\lambda ki}^n$, until the difference values between the theoretical single-wave output optical power calculated with the theoretical model and the actual single-wave output optical power monitored by the OPM are all smaller than the set threshold, where $\Delta P_{\lambda ki}^n = P_{\lambda ko}^{n-1} - P_{\lambda ko}^{opm}$.

If in an n<sup>th</sup> time (n≥0), the difference values between the theoretical single-wave output optical power calculated with theoretical model and the actual single-wave output optical power monitored by the OPM are all smaller than the set threshold, $P_{\lambda ki}^n$ is taken as the theoretical single-wave input optical power of the EDFA1 of the theoretical model, and therefore, the theoretical single-wave output optical power of the EDFA1 calculated with the theoretical model is close to the actual single-wave output optical power of the EDFA1, thereby implementing the modification on the theoretical single-wave output optical power of the EDFA1.

For a fiber loss from the EDFA1 and an EDFA2, because the single-wave output power of the EDFA1 undergoing attenuation of a fiber and a component and an SRS effect of the fiber is equal to single-wave input optical power of the EDFA2, theoretical single-wave input optical power of the EDFA2 may be obtained through calculation with an SRS model.

Because there is no OPM in the EDFA2, theoretical input optical power of the EDFA2 calculated with the model is modified according to actual total input optical power monitored by the EDFA2. An optical power spectrum (including a single-wave power spectrum and ASE power) of each node in the link is calculated step by step by using the accurate input optical power of the EDFA1 obtained through the model in step 51 to step 55 and by using the EDFA model and the SRS model, until theoretical single-wave output optical power of an EDFA3 is calculated. The modification method in Embodiment 1 is used in the calculation process, and modification is performed on an input and an output of each amplifier.

Modification is performed on a calculation parameters of the model in each span of the OMS1 by using an output optical power spectrum of the EDFA3 monitored by an OPM2. There are two spans inside the OMS1. A first span is from the EDFA1 to the EDFA2, and a second span is from the EDFA2 to the EDFA3.

Theoretical values of nodes in each span of the OMS1 calculated with the theoretical model are modified by using the single-wave actual optical power of the EDFA3 monitored by the OPM2. These theoretical values include input and output optical power of each node in the OMS1 calculated with the theoretical model and an OSNR.

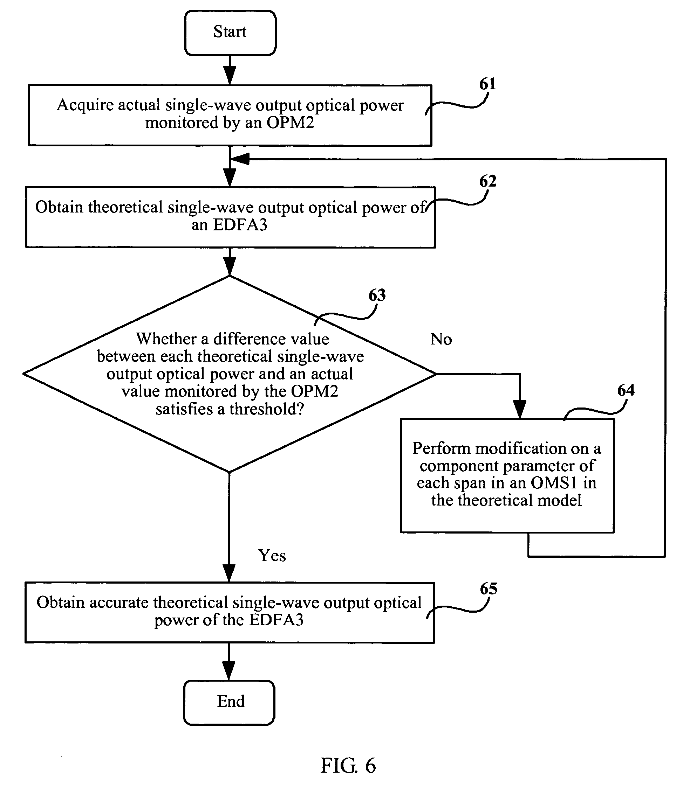

Specifically, as shown in FIG. 6, the following steps are included.

Step 61: Acquire actual single-wave output optical power of an EDFA3 monitored by an OPM2.

Step 62: Acquire theoretical single-wave output optical power $P_{\lambda ko}^n$ of the EDFA3 calculated with a theoretical model, where an initial value of n is 0.

Step 63: Compare $P_{\lambda ko}^{n}$ with an actual value monitored by the OPM2, which is the actual single-wave output optical power of the EDFA3, so as to determine whether a difference value between the two satisfies a threshold, that is, whether the difference value is not greater than the threshold. When the difference value satisfies the threshold, perform step 65; otherwise, perform step 64.

Step 64: Allocate the difference value calculated in step 63 to a component parameter of each span in an OMS1, that is, perform modification on the component parameter of each span in the OMS1 in the theoretical model, and then perform step 62.

Assume that the difference value between a theoretical output optical power spectrum of the EDFA3 calculated with the theoretical model, that is the theoretical single-wave output optical power $P_{\lambda ko}^{n}$, and the actual single-wave output optical power of the EDFA3 monitored by the OPM2 is $\Delta P_{\lambda k}$, the difference value $\Delta P_{\lambda k}$ may be considered to be caused by an unknown wavelength dependent property of a component in the link. During modification, an average manner or a weighted average manner may be adopted to allocate $\Delta P_{\lambda k}$ to each span in the theoretical model to modify a WDL property parameter of a VOA component. For example, for a wavelength k, an obtained difference value $\Delta P_{\lambda k}$ is equal to 0.6 dB. The OMS1 has two spans. Losses of an attenuator VOA in each span for all wavelengths in the theoretical model are 3 dB. Therefore, a loss of the attenuator in the theoretical model may be modified according to the difference value $\Delta P_{\lambda k}$, that is, the loss is modified to that the loss of the attenuator for the k$^{th}$ wavelength is (3+0.6/2)=3.3 dB. The difference value is allocated in an average method in the foregoing. When a weighted average method is used for allocation, and if attenuations set by the VOA of the two spans are different, 0.6 dB may be allocated to attenuators in the two spans of the OMS1 according to an attenuation of the VOA itself, and average is not necessarily needed.

An output theoretical power spectrum of the EDFA3 is calculated once again by using the modified link parameter in the theoretical model. Whether $\Delta P_{\lambda k}$ satisfies the set threshold is determined again. If $\Delta P_{\lambda k}$ does not satisfy the set threshold, iterative calculation is performed on $\Delta P_{\lambda k}$ by using the same processing method, until $\Delta P_{\lambda k}$ satisfies the threshold.

Step 65: Obtain accurate theoretical single-wave output optical power of the EDFA3. When $\Delta P_{\lambda k}$ satisfies the threshold, the theoretical single-wave output optical power $P_{\lambda ko}^{n}$ of the EDFA3 calculated with the theoretical model is close to an actual optical power value, and therefore, accuracy is improved, a more accurate OSNR is obtained and modification is performed on single-wave theoretical optical power of a receiving end of the OMS1. An output of the EDFA3 is the receiving end of the OMS1.

Similarly, actual single-wave output optical power of an EDFA4 monitored by an OPM3 is used to modify theoretical single-wave output optical power of the EDFA4 calculated with the theoretical model. Theoretical optical power of an EDFA5 calculated with the theoretical model is acquired, and the modification method is similar to that of the EDFA2. After theoretical output optical power of an EDFA6 calculated with the theoretical model is acquired, actual single-wave output optical power of the EDFA6 monitored by an OPM4 is used to modify a calculation result of the theoretical model in each span of an OMS2. For the modification method, reference may be made to the description shown in FIG. 6.

When all EDFAs in the link having OPM sites shown in FIG. 4 cannot monitor total input and output optical power of an amplifier, the parameter and calculation result of the theoretical model may be modified according to the actual single-wave output optical power monitored by the OPM. For the theoretical single-wave input optical power of the EDFA1, the modification method is completely consistent with the modification method of the single wave shown in FIG. 5.

After the accurate theoretical input optical power of the EDFA1 calculated with the theoretical model is obtained, an EDFA model and an SRS model are used to calculate a theoretical optical power spectrum of each node in the link step by step. During the calculation process, because the EDFA cannot monitor total input and output optical power of each amplifier, calculation is performed only according to a gain set in the theoretical model, until the theoretical output optical power spectrum of the EDFA3 is calculated with the theoretical model. In this case, because control precision of the EDFA in the link is inaccurate, for example, a gain of the EDFA is set to 20 dB, but a locked result in actual work may be 20.2 dB.

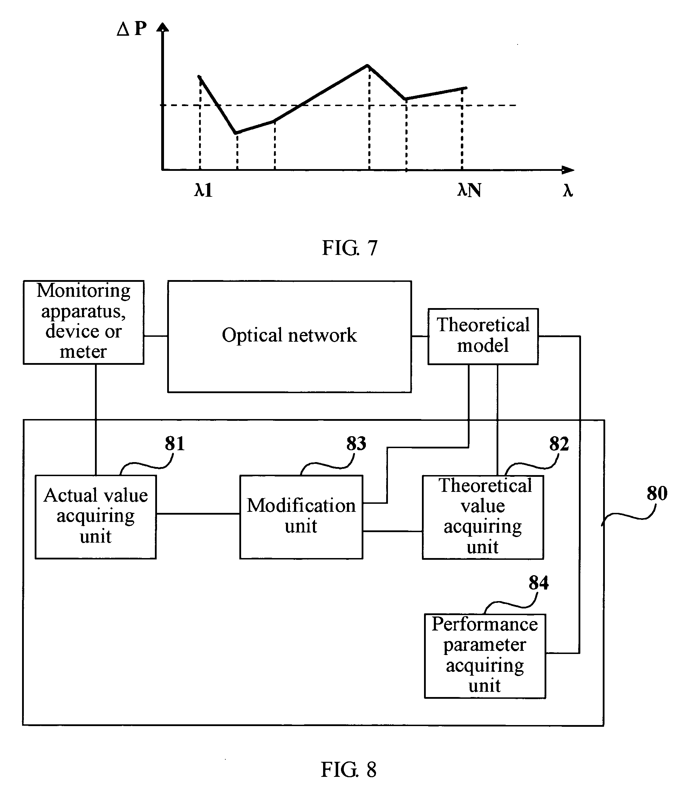

Relative to a monitored result, apart from a corresponding deviation of each single wave, an overall average deviation of a theoretical model calculation result exists, which is called a multiplexed wave deviation. An error between a result which is output by an EDFA3 and calculated with a theoretical model and a result monitored by an OPM2 is shown in FIG. 7, where the solid broken line is a single-wave deviation, and the horizontal dotted line is the multiplexed wave deviation. Therefore, modification performed according to the result monitored by the OPM2 includes multiplexed wave power modification and single-wave power modification. An objective of the multiplexed wave modification is to enable difference values between single-wave theoretical optical power calculated with the theoretical model and single-wave actual optical power monitored by the OPM2 not to deviate in a same direction, and an objective of the single-wave modification is to enable the difference values between the single-wave theoretical optical power calculated with the theoretical model and the single-wave actual optical power monitored by the OPM2 to approach 0 as much as possible.

Specifically, during multiplexed wave modification, the actual single-wave output optical power monitored by the OPM2 is converted to power in a linear unit (mw). The power in the linear unit (mw) is added together, and the added result is converted to a result in a logarithmic unit (dBm), to obtain actual total output optical power $P_{\text{measurement}}$ (dBm) of the EDFA3. Theoretical total output optical power $P_{calulation}$ (dBm) is calculated with the theoretical model in the same method, and then a difference value between the actual total output optical power $P_{\text{measurement}}$ and the theoretical total output optical power $P_{\text{calculation}}$ is calculated as a multiplexed wave error:

$$\Delta P = P_{\text{measurement}} - P_{\text{calculation}}$$

$\Delta P$ may be considered to be caused by inaccurate setting of gains of the EDFA2 and the EDFA3 in the theoretical model, and may also be considered to be caused by inaccuracy of a fixed insertion loss of a component in the span.

Assume that $\Delta P$ is a multiplexed wave error caused by inaccuracy of control precision of all amplifiers, during the modification process, in consideration of that target gain values set by all the amplifiers are not the same completely, the target gain values may be modified in an average method or a weighted average method. Weighted average refers to that if there are only two EDFAs in the link, their target gains are 20 dB and 30 dB. Assume that the theoretical total output optical power $P_{\text{calculation}}$ calculated with the theoretical model is 0.5 dB greater than the actual total output optical power $P_{\text{measurement}}$ monitored by the OPM2, and the modified target gains of the two EDFAs in the theoretical model are 20.2 dB and 20.3 dB. Starting from a second amplifier in the OMS, a result of a receiving end of the OMS is calculated again with the theoretical model with the target gains modified, to obtain the theoretical total output optical power that is closer to the actual optical power, which is the more accurate theoretical total output optical power.

In order to make multiplexed wave gain modification more accurate, a threshold may be set as a condition of convergence of multiplexed wave modification. If the difference value between the calculation result of the theoretical model and the actual value monitored by the OPM2 is greater than the threshold, the target gain of the EDFA is modified again, until the target gain is converged. When $\Delta P$ is caused by the inaccuracy of the insertion loss of the component in the span, the same manner may be adopted to modify the insertion loss of the component in the span of the theoretical model.

During single-wave modification, the average deviation, between the calculation result of the theoretical model and the result monitored by the OPM2, deviating to the same direction is not taken into consideration, that is, that a difference between the calculation result of each single wave of the theoretical model and the result monitored by the OPM2 deviates to the same direction is not taken into consideration. Assume that a difference between the theoretical output optical power spectrum of the EDFA3 calculated with the theoretical model and an actual output optical power spectrum monitored by the OPM2 is $\Delta P_{\lambda k}$, and a deviation between $\Delta P_{\lambda k}$ and the multiplexed wave error $\Delta P$ is:

$$\Delta P_{\lambda k}{}' = \Delta P_{\lambda k} - \Delta P$$

$\Delta P_{\lambda k}{}'$ may be considered to be caused by an error existing between a property parameter value of the component in the link in the theoretical model and an actual parameter. An average manner or a weighted average manner may be adopted for processing. $\Delta P_{\lambda k}{}'$ is allocated to each span to modify the WDL property parameter of the VOA component in the theoretical model. The theoretical model with the link parameter modified is used to recalculate the theoretical output optical power spectrum of the EDFA3. Whether $\Delta P_{\lambda k}{}'$ satisfies the set threshold is determined through comparison again. If $\Delta P_{\lambda k}{}'$ does not satisfy the set threshold, iterative calculation is again performed on $\Delta P_{\lambda k}{}'$ in the same processing method, until $\Delta P_{\lambda k}{}'$ satisfies the threshold.

When $\Delta P_{\lambda k}{}'$ satisfies the threshold, that is, $\Delta P_{\lambda k}{}'$ is smaller than the threshold, it indicates that the theoretical output optical power spectrum of the EDFA3 calculated with the current theoretical model is quite close to the actual value, which is the actual output optical power. In this case, the theoretical output optical power calculated with the theoretical model may be considered to be accurate.

The single wave modification may be implemented after the multiplexed wave modification and may also be implemented simultaneously when the multiplexed wave modification is implemented.

Similarly, a gain of each amplifier in the OMS2 and a loss of a span component in the theoretical model are modified.

In the technical solution according to the foregoing embodiment, the parameter in the theoretical model is modified by using the monitored actual optical power, which solves a problem of a great error caused by inaccuracy of a property parameter of a component, such as a gain or a loss, during a process of calculating a performance parameter of a transmission link by using a theoretical model in the prior art, and implements accurate evaluation of power and an OSNR value of a signal at each point in the link by using the theoretical model.

Those of ordinary skill in the art should understand that all or a part of the steps of the foregoing method embodiments may be implemented by a program instructing relevant hardware. The program may be stored in a computer readable storage medium. When the program is run, the steps of the foregoing method embodiments are performed. The storage medium may be any medium that is capable of storing program codes, such as a ROM, a RAM, a magnetic disk or an optical disk.

FIG. 8 is a schematic structural diagram of an apparatus for obtaining a performance parameter of an optical network link according to an embodiment of the present invention. As shown in FIG. 8, the apparatus 80 for obtaining a performance parameter of an optical network link includes: an actual value acquiring unit 81, a theoretical value acquiring unit 82, a modification unit 83 and a performance parameter acquiring unit 84.

The actual value acquiring unit 81 is configured to acquire actual optical power from each monitoring point of an optical network link; the theoretical value acquiring unit 82 is configured to correspondingly acquire theoretical optical power of each monitoring point calculated with a theoretical model; the modification unit 83 is configured to perform modification on at least one parameter of an amplifier gain and a link loss of the optical network link in the theoretical model by using the actual optical power and the corresponding theoretical optical power of each monitoring point; and the performance parameter acquiring unit 84 is configured to obtain a performance parameter value of each node in the optical network link from the modified theoretical model.

The actual value acquiring unit 81 may be specifically configured to:

acquire, from each EDFA in the optical network link, actual multiplexed wave optical power monitored by the EDFA.

Or the actual value acquiring unit 81 is specifically configured to:

acquire, from an OPM set in a part of EDFAs of the optical network link, actual single-wave optical power monitored by the OPM, and acquire, from the other EDFAs, actual multiplexed wave optical power monitored by the EDFA.

Or the actual value acquiring unit 81 is specifically configured to:

acquire, from an OPM in each EDFA in the optical network link, actual single-wave optical power monitored by the OPM.

Or the actual value acquiring unit 81 is specifically configured to:

acquire, from each node of the optical network link, actual multiplexed wave optical power or actual single-wave optical power monitored by a monitoring device or meter.

The modification unit may include:

a first modification subunit, configured to use actual total input optical power of a first amplifier of the optical network link to modify theoretical single-wave input optical power of the first amplifier; and
a second modification subunit, configured to use the modified theoretical single-wave input optical power to modify a link loss of a transmitting end of the optical network link in the theoretical model.

Or the modification unit may include:

a first subtraction subunit, configured to subtract theoretical total output optical power calculated with the theoretical model from actual total output optical power of the EDFA monitored by the EDFA, to obtain a difference value;
an addition subunit, configured to add the difference value to the theoretical output optical power, to obtain modified theoretical total output optical power;
a modified gain acquiring subunit, configured to obtain a modified gain of the EDFA by using the theoretical total input optical power of the EDFA and the modified theoretical total output optical power; and
a replacement subunit, configured to replace an original gain of the EDFA in the theoretical model with the modified gain.

Or, the modification unit may include:

a first comparison subunit, configured to compare actual total input optical power monitored by the EDFA with theoretical total input optical power calculated with the theoretical model; and
a third modification subunit, configured to: in a case that the actual total input optical power and the theoretical total input optical power are inconsistent, perform modification on the theoretical total input optical power, and use the modified theoretical total input optical power and theoretical total output optical power modified by a previous EDFA to perform modification on a VOA loss or a loss of a span component between the EDFA and the previous EDFA in the theoretical model.

Or, the modification unit may include:

a total gain obtaining subunit, configured to subtract actual total input optical power monitored by the EDFA from a sum of actual single-wave output optical power of the EDFA monitored by the OPM, to obtain a total gain of the EDFA; and
a total gain modification subunit, configured to replace a total gain of the EDFA in the theoretical model with the obtained total gain.

Or, the modification unit may include:

a second subtraction subunit, configured to subtract corresponding theoretical single-wave output optical power calculated with the theoretical model from actual single-wave output optical power of the EDFA monitored by the OPM, to obtain a difference value between actual output optical power and theoretical output optical power of each single wave;
a second comparison subunit, configured to compare the difference value between the actual optical power and the theoretical optical power of each single wave with a preset threshold;
a fourth modification subunit, configured to: in a case that at least one of difference values is greater than the threshold, modify theoretical single-wave input optical power of the EDFA in the theoretical model; and
a loss modification subunit, configured to use the modified theoretical single-wave input optical power of the EDFA to modify the link loss of the transmitting end of the optical network link in the theoretical model.

Further, the modification unit may also include:

a third subtraction subunit, configured to allocate the difference value between the actual output optical power and the theoretical output optical power of each single wave to each span of an optical multiplexer section where the OPM is located in an average manner or a weighted average manner, so as to correspondingly modify a link loss of each span in the theoretical model; and
a fifth modification subunit, configured to use the modified theoretical model to recalculate the theoretical output optical power of each single wave, so as to obtain a new difference value between the actual output optical power and the theoretical output optical power of each single wave, until the difference value is smaller than the threshold.

Or, the modification unit may also include:

a fourth subtraction subunit, configured to subtract theoretical total output optical power obtained through the theoretical model from a sum of actual single-wave output optical power monitored by a last OPM in an optical multiplexer section where the OPM is located, to obtain a multiplexed wave difference value;
a sixth modification subunit, configured to use the multiplexed wave difference value to perform modification on a gain of the EDFA of the optical multiplexer section where the OPM is located in an average manner or a weighted average manner;
a fifth subtraction subunit, configured to subtract theoretical single-wave output optical power calculated with the theoretical model from the actual single-wave output optical power monitored by the last OPM, to obtain a single-wave difference value;
a sixth subtraction subunit, configured to subtract the single-wave difference value from the multiplexed wave difference value, to obtain a deviation value;

a third comparison subunit, configured to compare the deviation value with a preset threshold; and
a seventh modification subunit, configured to: in a case that the deviation value is greater than the threshold, use the deviation value to modify a link loss in the optical multiplexer section where the OPM is located in an average manner or a weighted average manner, until the deviation value is smaller than the threshold.

In the foregoing apparatus embodiment, in the apparatus for obtaining a performance parameter of an optical network link, the monitored actual optical power and the theoretical optical power are acquired by the acquiring unit; modification is performed by the modification unit on the theoretical model by using the actual optical power and the theoretical optical power; and the performance parameter value of each node of the optical network is obtained by the performance parameter acquiring unit from the modified theoretical model, thereby enabling a performance parameter given through the theoretical model to be more accurate, solving a problem in the prior art that a deviation between the performance parameter calculated with the theoretical model and an actually measured result is large, and improving accuracy of the performance parameter given through the theoretical model.

Finally, it should be noted that the foregoing embodiments are merely provided for describing the technical solutions of the present invention, but not intended to limit the present invention. Although the present invention is described in detail with reference to the foregoing embodiments, persons of ordinary skill in the art should understand that they may still make modifications to the technical solutions described in the embodiments, or equivalent replacements to part of the technical features in the technical solutions; however, these modifications or replacements do not make the essence of corresponding technical solutions depart from the scope of the present invention.

## Claims

1.  A method for obtaining a performance parameter of an optical network link, comprising:

    acquiring actual optical power from each monitoring point of an optical network link by measuring;
    correspondingly acquiring theoretical optical power of each monitoring point calculated by using a theoretical model;
    performing modification on at least one parameter of an amplifier gain and a link loss of the optical network link in the theoretical model by using the actual optical power and the corresponding theoretical optical power of each monitoring point; and
    obtaining a performance parameter value of each node in the optical network link from the modified theoretical model;

    wherein the performing modification on at least one parameter of an amplifier gain and a link loss of the optical network link in the theoretical model by using the actual optical power and the corresponding theoretical optical power of each monitoring point comprises:

    subtracting corresponding theoretical single-wave output optical power calculated by using the theoretical model from actual single-wave output optical power of an erbium-doped fiber amplifier, EDFA, monitored by an optical performance monitor, OPM, to obtain a difference value between actual output optical power and theoretical output optical power of each single wave;
    comparing a difference value between actual optical power and theoretical optical power of each single wave with a preset threshold;
    in a case that at least one of difference values is greater than the threshold, modifying theoretical single-wave input optical power of the EDFA in the theoretical model; and
    using the modified theoretical single-wave input optical power of the EDFA to modify a link loss of a transmitting end of the optical network link in the theoretical model, wherein the link loss of a transmitting end is a link loss between a laser in the transmitting end and the EDFA.

2.  The method for obtaining a performance parameter of an optical network link according to claim 1, wherein the performing modification on at least one parameter of an amplifier gain and a link loss of the optical network link in the theoretical model by using the actual optical power and the corresponding theoretical optical power of each monitoring point comprises:

    using actual total input optical power of a first amplifier in the optical network link to modify theoretical single-wave input optical power of the first amplifier; and
    using the modified theoretical single-wave input optical power to modify a link loss of a transmitting end of the optical network link in the theoretical model.

3. The method for obtaining a performance parameter of an optical network link according to claim 1, wherein the performing modification on at least one parameter of an amplifier gain and a link loss of the optical network link in the theoretical model by using the actual optical power and the corresponding theoretical optical power of each monitoring point comprises:

subtracting theoretical total output optical power calculated by using the theoretical model from actual total output optical power of the EDFA monitored by the EDFA, to obtain a difference value;
adding the difference value to the theoretical output optical power, to obtain modified theoretical total output optical power;
obtaining a modified gain of the EDFA by using the theoretical total input optical power of the EDFA and the modified theoretical total output optical power; and
replacing an original gain of the EDFA in the theoretical model with the modified gain.

4. The method for obtaining a performance parameter of an optical network link according to claim 1, wherein the performing modification on at least one parameter of an amplifier gain and a link loss of the optical network link in the theoretical model by using the actual optical power and the corresponding theoretical optical power of each monitoring point comprises:

comparing actual total input optical power monitored by the EDFA with theoretical total input optical power calculated by using the theoretical model; and
in a case that the actual total input optical power and the theoretical total input optical power are inconsistent, performing modification on the theoretical total input optical power, and using the modified theoretical total input optical power and theoretical total output optical power modified by a previous EDFA to perform modification on a VOA loss or a loss of a span component between the EDFA and the previous EDFA in the theoretical model.

5. The method for obtaining a performance parameter of an optical network link according to claim 1, wherein the performing modification on at least one parameter of an amplifier gain and a link loss of the optical network link in the theoretical model by using the actual optical power and the corresponding theoretical optical power of each monitoring point comprises:

subtracting actual total input optical power monitored by the EDFA from a sum of actual single-wave output optical power of the EDFA monitored by the OPM, to obtain a total gain of the EDFA; and
replacing a total gain of the EDFA in the theoretical model with the obtained total gain.

6. The method for obtaining a performance parameter of an optical network link according to claim 1, wherein the performing modification on at least one parameter of an amplifier gain and a link loss of the optical network link in the theoretical model by using the actual optical power and the corresponding theoretical optical power of each monitoring point comprises:

allocating the difference value between the actual output optical power and the theoretical output optical power of each single wave to each span of an optical multiplexer section where the OPM is located in an average manner or a weighted average manner, so as to correspondingly modify a link loss of each span in the theoretical model; and
using the modified theoretical model to recalculate the theoretical output optical power of each single wave, so as to obtain a new difference value between the actual output optical power and the theoretical output optical power of each single wave, until the difference value is smaller than the threshold.

7. The method for obtaining a performance parameter of an optical network link according to claim 1, wherein the performing modification on at least one parameter of an amplifier gain and a link loss of the optical network link in the theoretical model by using the actual optical power and the corresponding theoretical optical power of each monitoring point comprises:

subtracting theoretical total output optical power obtained through the theoretical model from a sum of actual single-wave output optical power monitored by a last OPM in an optical multiplexer section where the OPM is located, to obtain a multiplexed wave difference value;
using the multiplexed wave difference value to perform modification on a gain of the EDFA of the optical multiplexer section where the OPM is located in an average manner or a weighted average manner;
subtracting theoretical single-wave output optical power calculated by using the theoretical model from the actual single-wave output optical power monitored by the last OPM, to obtain a single-wave difference value;
subtracting the single-wave difference value from the multiplexed wave difference value, to obtain a deviation value;
comparing the deviation value with the preset threshold; and
in a case that the deviation value is greater than the threshold, using the deviation value to modify a link loss in the optical multiplexer section where the OPM is located in an average manner or a weighted average manner, until the deviation value is smaller than the threshold.

8. An apparatus (80) for obtaining a performance parameter of an optical network link, comprising:

an actual value acquiring unit (81), configured to acquire actual optical power from each monitoring point of an optical network link by measuring;
a theoretical value acquiring unit (82), configured to acquire theoretical optical power of each monitoring point calculated by using a theoretical model;
a modification unit (83), configured to perform modification on at least one parameter of an amplifier gain and a link loss of the optical network link in the theoretical model by using the actual optical power and the corresponding theoretical optical power of each monitoring point; and
a performance parameter acquiring unit (84), configured to obtain a performance parameter value of each node in the optical network link from the modified theoretical model;

wherein the modification unit (83) comprises:

a second subtraction subunit, configured to subtract corresponding theoretical single-wave output optical power calculated by using the theoretical model from actual single-wave output optical power of an erbium-doped fiber amplifier, EDFA, monitored by an optical performance monitor, OPM, to obtain a difference value between actual output optical power and theoretical output optical power of each single wave;
a second comparison subunit, configured to compare a difference value between actual optical power and theoretical optical power of each single wave with a preset threshold;
a fourth modification subunit, configured to: in a case that at least one of difference values is greater than the threshold, modify theoretical single-wave input optical power of the EDFA in the theoretical model; and
a loss modification subunit, configured to use the modified theoretical single-wave input optical power of the EDFA to modify a link loss of a transmitting end of the optical network link in the theoretical model, wherein the link loss of a transmitting end is a link loss between a laser in the transmitting end and the EDFA.

9. The apparatus (80) for obtaining a performance parameter of an optical network link according to claim 8, wherein the modification unit (83) comprises:

a first modification subunit, configured to use actual total input optical power of a first amplifier of the optical network link to modify theoretical single-wave input optical power of the first amplifier; and
a second modification subunit, configured to use the modified theoretical single-wave input optical power to modify a link loss of a transmitting end of the optical network link in the theoretical model.

10. The apparatus (80) for obtaining a performance parameter of an optical network link according to claim 8, wherein the modification unit (83) comprises:

a first subtraction subunit, configured to subtract theoretical total output optical power calculated by using the theoretical model from actual total output optical power of the EDFA monitored by the EDFA, to obtain a difference value;
an addition subunit, configured to add the difference value to the theoretical output optical power, to obtain modified theoretical total output optical power;
a modified gain acquiring subunit, configured to obtain a modified gain of the EDFA by using theoretical total input optical power of the EDFA and the modified theoretical total output optical power; and
a replacement subunit, configured to replace an original gain of the EDFA in the theoretical model with the modified gain.

11. The apparatus (80) for obtaining a performance parameter of an optical network link according to claim 8, wherein the modification unit (83) comprises:

a first comparison subunit, configured to compare actual total input optical power monitored by the EDFA with theoretical total input optical power calculated by using the theoretical model; and
a third modification subunit, configured to: in a case that the actual total input optical power and the theoretical total input optical power are inconsistent, perform modification on the theoretical total input optical power, and use the modified theoretical total input optical power and theoretical total output optical power modified by a previous EDFA to perform modification on a VOA loss or a loss of a span component between the EDFA and the previous EDFA in the theoretical model.

12. The apparatus (80) for obtaining a performance parameter of an optical network link according to claim 8, wherein the modification unit (83) comprises:

a total gain obtaining subunit, configured to subtract actual total input optical power monitored by the EDFA from a sum of actual single-wave output optical power of the EDFA monitored by the OPM, to obtain a total gain of the EDFA; and
a total gain modification subunit, configured to replace a total gain of the EDFA in the theoretical model with the obtained total gain.

13. The apparatus (80) for obtaining a performance parameter of an optical network link according to claim 8, wherein the modification unit (83) further comprises:

a third subtraction subunit, configured to allocate the difference value between the actual output optical power and the theoretical output optical power of each single wave to each span of an optical multiplexer section where the OPM is located in an average manner or a weighted average manner, so as to correspondingly modify a link loss of each span in the theoretical model; and
a fifth modification subunit, configured to use the modified theoretical model to recalculate the theoretical output optical power of each single wave, so as to obtain a new difference value between the actual output optical power and the theoretical output optical power of each single wave, until the difference value is smaller than the threshold.

14. The apparatus (80) for obtaining a performance parameter of an optical network link according to claim 8, wherein the modification unit (83) further comprises:

a fourth subtraction subunit, configured to subtract theoretical total output optical power obtained through the theoretical model from a sum of actual single-wave output optical power monitored by a last OPM in an optical multiplexer section where the OPM is located, to obtain a multiplexed wave difference value;
a sixth modification subunit, configured to use the multiplexed wave difference value to perform modification on a gain of the EDFA of the optical multiplexer section where the OPM is located in an average manner or a weighted average manner;
a fifth subtraction subunit, configured to subtract theoretical single-wave output optical power calculated by using the theoretical model from the actual single-wave output optical power monitored by the last OPM, to obtain a single-wave difference value;
a sixth subtraction subunit, configured to subtract the single-wave difference value from the multiplexed wave difference value, to obtain a deviation value;
a third comparison subunit, configured to compare the deviation value with the preset threshold; and
a seventh modification subunit, configured to: in a case that the deviation value is greater than the threshold, use the deviation value to modify a link loss in the optical multiplexer section where the OPM is located in an average manner or a weighted average manner, until the deviation value is smaller than the threshold.

**Patentansprüche**

1. Verfahren zum Erhalten eines Leistungsparameters einer Verbindungsstrecke eines optischen Netzes, das Folgendes umfasst:

Erfassen der tatsächlichen optischen Leistung von jedem Überwachungspunkt einer Verbindungsstrecke eines optischen Netzes durch Messen;

dementsprechendes Erfassen der theoretischen optischen Leistung jedes Überwachungspunkts, die durch Verwenden eines theoretischen Modells berechnet wird;

Ausführen von Modifikation auf wenigstens einem Parameter eines Verstärkungsfaktors und einem Verbindungsstreckenverlust der Verbindungsstrecke eines optischen Netzes in dem theoretischen Modell unter Verwendung der tatsächlichen optischen Leistung und der entsprechenden theoretischen optischen Leistung jedes Überwachungspunkts; und

Erhalten eines Leistungsparameterwerts jedes Knotens in der Verbindungsstrecke eines optischen Netzes aus dem modifizierten theoretischen Modell;

wobei das Ausführen von Modifikation auf wenigstens einem Parameter eines Verstärkungsfaktors und einem Verbindungsstreckenverlust der Verbindungsstrecke eines optischen Netzes in dem theoretischen Modell unter Verwendung der tatsächlichen optischen Leistung und der entsprechenden theoretischen optischen Leistung jedes Überwachungspunkts Folgendes umfasst:

Subtrahieren einer entsprechenden theoretischen optischen Einzelwellenausgangsleistung, die durch Verwenden des theoretischen Modells berechnet wird, von der tatsächlichen optischen Einzelwellenausgangsleistung eines Erbium-dotierten Faserverstärkers, EDFA, der durch eine Überwachungseinheit für optische Leistung, OPM, überwacht wird, um einen Differenzwert zwischen der tatsächlichen optischen Ausgangsleistung und der theoretischen optischen Ausgangsleistung jeder Einzelwelle zu erhalten;

Vergleichen eines Differenzwerts zwischen der tatsächlichen optischen Leistung und der theoretischen optischen Leistung jeder Einzelwelle mit einem voreingestellten Schwellenwert;

in einem Fall, wenn wenigstens einer der Differenzwerte größer ist als der Schwellenwert, Modifizieren der theoretischen optischen Einzelwelleneingangsleistung des EDFA in dem theoretischen Modell; und

Verwenden der modifizierten theoretischen optischen Einzelwelleneingangsleistung des EDFA, um einen Verbindungsstreckenverlust eines Sendeendes der Verbindungsstrecke eines optischen Netzes in dem theoretischen Modell zu modifizieren, wobei der Verbindungsstreckenverlust eines Sendeendes ein Verbindungsstreckenverlust zwischen einem Laser in dem Sendeende und dem EDFA ist.

2. Verfahren zum Erhalten eines Leistungsparameters einer Verbindungsstrecke eines optischen Netzes nach Anspruch 1, wobei das Ausführen von Modifikation auf wenigstens einem Parameter eines Verstärkungsfaktors und einem Verbindungsstreckenverlust der Verbindungsstrecke eines optischen Netzes in dem theoretischen Modell unter Verwendung der tatsächlichen optischen Leistung und der entsprechenden theoretischen optischen Leistung jedes Überwachungspunkts Folgendes umfasst:

Verwenden der tatsächlichen optischen Gesamteingangsleistung eines ersten Verstärkers in der Verbindungsstrecke eines optischen Netzes, um die theoretische optische Einzelwelleneingangsleistung des ersten Verstärkers zu modifizieren; und

Verwenden der modifizierten theoretischen optischen Einzelwelleneingangsleistung, um einen Verbindungsstreckenverlust eines Sendeendes der Verbindungsstrecke eines optischen Netzes in dem theoretischen Modell zu modifizieren.

3. Verfahren zum Erhalten eines Leistungsparameters einer Verbindungsstrecke eines optischen Netzes nach Anspruch 1, wobei das Ausführen von Modifikation auf wenigstens einem Parameter eines Verstärkungsfaktors und einem Verbindungsstreckenverlust der Verbindungsstrecke eines optischen Netzes in dem theoretischen Modell unter Verwendung der tatsächlichen optischen Leistung und der entsprechenden theoretischen optischen Leistung jedes Überwachungspunkts Folgendes umfasst:

Subtrahieren der theoretischen optischen Gesamtausgangsleistung, die durch Verwenden des theoretischen Modells berechnet wird, von der tatsächlichen optischen Gesamtausgangsleistung des EDFA, die durch den EDFA überwacht wird, um einen Differenzwert zu erhalten;

Addieren des Differenzwerts zu der theoretischen optischen Ausgangsleistung, um die modifizierte theoretische optische Gesamtausgangsleistung zu erhalten;

Erhalten einer modifizierten Verstärkung des EDFA unter Verwendung der theoretischen optischen Gesamteingangsleistung des EDFA und der modifizierten theoretischen optischen Gesamtausgangsleistung; und

Ersetzen einer ursprünglichen Verstärkung des EDFA in dem theoretischen Modell durch die modifizierte Verstärkung.

4. Verfahren zum Erhalten eines Leistungsparameters einer Verbindungsstrecke eines optischen Netzes nach Anspruch 1, wobei das Ausführen von Modifikation auf wenigstens einem Parameter eines Verstärkungsfaktors und einem Verbindungsstreckenverlust der Verbindungsstrecke eines optischen Netzes in dem theoretischen Modell unter Verwendung der tatsächlichen optischen Leistung und der entsprechenden theoretischen optischen Leistung jedes Überwachungspunkts Folgendes umfasst:

Vergleichen der tatsächlichen optischen Gesamteingangsleistung, die durch den EDFA überwacht wird, mit der theoretischen optischen Gesamteingangsleistung, die durch Verwenden des theoretischen Modells berechnet wird; und

in einem Fall, wenn die tatsächliche optische Gesamteingangsleistung und die theoretische optische Gesamteingangsleistung inkonsistent sind, Ausführen von Modifikation auf der theoretischen optischen Gesamteingangsleistung und Verwenden der modifizierten theoretischen optischen Gesamteingangsleistung und der theoretischen optischen Gesamtausgangsleistung, die durch einen vorherigen EDFA modifiziert wird, um Modifikation auf einem VOA-Verlust oder einem Verlust einer Abstandskomponente zwischen dem EDFA und dem vorherigen EDFA in dem theoretischen Modell auszuführen.

5.  Verfahren zum Erhalten eines Leistungsparameters einer Verbindungsstrecke eines optischen Netzes nach Anspruch 1, wobei das Ausführen von Modifikation auf wenigstens einem Parameter eines Verstärkungsfaktors und einem Verbindungsstreckenverlust der Verbindungsstrecke eines optischen Netzes in dem theoretischen Modell unter Verwendung der tatsächlichen optischen Leistung und der entsprechenden theoretischen optischen Leistung jedes Überwachungspunkts Folgendes umfasst:

Subtrahieren der tatsächlichen optischen Gesamteingangsleistung, die durch den EDFA überwacht wird, von einer Summe tatsächlicher optischer Einzelwellenausgangsleistung des EDFA, die durch die OPM überwacht wird, um eine Gesamtverstärkung des EDFA zu erhalten; und

Ersetzen einer Gesamtverstärkung des EDFA in dem theoretischen Modell durch die erhaltene Gesamtverstärkung.

6.  Verfahren zum Erhalten eines Leistungsparameters einer Verbindungsstrecke eines optischen Netzes nach Anspruch 1, wobei das Ausführen von Modifikation auf wenigstens einem Parameter eines Verstärkungsfaktors und einem Verbindungsstreckenverlust der Verbindungsstrecke eines optischen Netzes in dem theoretischen Modell unter Verwendung der tatsächlichen optischen Leistung und der entsprechenden theoretischen optischen Leistung jedes Überwachungspunkts Folgendes umfasst:

Zuweisen des Differenzwerts zwischen der tatsächlichen optischen Ausgangsleistung und der theoretischen optischen Ausgangsleistung jeder Einzelwelle zu jedem Abstand eines optischen Multiplexerabschnitts, in dem sich die OPM befindet, auf eine gemittelte Weise oder eine gewichtete gemittelte Weise, um dementsprechend einen Verbindungsstreckenverlust jedes Abstands in dem theoretischen Modell zu modifizieren; und

Verwenden des modifizierten theoretischen Modells, um die theoretische optische Ausgangsleistung jeder Einzelwelle neu zu berechnen, um einen neuen Differenzwert zwischen der tatsächlichen optischen Ausgangsleistung und der theoretischen optischen Ausgangsleistung jeder Einzelwelle zu erhalten, bis der Differenzwert kleiner als der Schwellenwert ist.

7.  Verfahren zum Erhalten eines Leistungsparameters einer Verbindungsstrecke eines optischen Netzes nach Anspruch 1, wobei das Ausführen von Modifikation auf wenigstens einem Parameter eines Verstärkungsfaktors und einem Verbindungsstreckenverlust der Verbindungsstrecke eines optischen Netzes in dem theoretischen Modell unter Verwendung der tatsächlichen optischen Leistung und der entsprechenden theoretischen optischen Leistung jedes Überwachungspunkts Folgendes umfasst:

Subtrahieren der theoretischen optischen Gesamtausgangsleistung, die durch das theoretische Modell erhalten wird, von einer Summe tatsächlicher optischer Einzelwellenausgangsleistung, die durch eine letzte OPM in einem optischen Multiplexerabschnitt, wo sich die OPM befindet, überwacht wird, um einen Differenzwert einer gemultiplexten Welle zu erhalten;

Verwenden des Differenzwerts der gemultiplexten Welle, um Modifikation auf einer Verstärkung des EDFA des optischen Multiplexerabschnitts, wo sich die OPM befindet, auf eine gemittelte Weise oder eine gewichtete gemittelte Weise auszuführen;

Subtrahieren der theoretischen optischen Einzelwellenausgangsleistung, die durch Verwenden des theoretischen Modells berechnet wird, von der tatsächlichen optischen Einzelwellenausgangsleistung, die durch die letzte OPM überwacht wird, um einen Einzelwellendifferenzwert zu erhalten;

Subtrahieren des Einzelwellendifferenzwerts von dem Differenzwert der gemultiplexten Welle, um einen Abweichungswert zu erhalten;

Vergleichen des Abweichungswerts mit dem voreingestellten Schwellenwert; und

in einem Fall, wenn der Abweichungswert größer ist als der Schwellenwert, Verwenden des Abweichungswerts, um einen Verbindungsstreckenverlust in dem optischen Multiplexerabschnitt, wo sich die OPM befindet, auf eine gemittelte Weise oder eine gewichtete gemittelte Weise zu modifizieren, bis der Abweichungswert kleiner als der Schwellenwert ist.

8. Vorrichtung (80) zum Erhalten eines Leistungsparameters einer Verbindungsstrecke eines optischen Netzes, die Folgendes umfasst:

eine Erfassungseinheit (81) für den tatsächlichen Wert, die konfiguriert ist, tatsächliche optische Leistung von jedem Überwachungspunkt einer Verbindungsstrecke eines optischen Netzes durch Messen zu erfassen;

eine Erfassungseinheit (82) für den theoretischen Wert, die konfiguriert ist, theoretische optische Leistung jedes Überwachungspunkts, die durch Verwenden eines theoretischen Modells berechnet wird, zu erfassen;

eine Modifikationseinheit (83), die konfiguriert ist, Modifikation auf wenigstens einem Parameter eines Verstärkungsfaktors und einem Verbindungsstreckenverlust der Verbindungsstrecke eines optischen Netzes in dem theoretischen Modell unter Verwendung der tatsächlichen optischen Leistung und der entsprechenden theoretischen optischen Leistung jedes Überwachungspunkts auszuführen; und

eine Leistungsparametererfassungseinheit (84), die konfiguriert ist, einen Leistungsparameterwert jedes Knotens in der Verbindungsstrecke eines optischen Netzes aus dem modifizierten theoretischen Modell zu erhalten;

wobei die Modifikationseinheit (83) Folgendes umfasst:

eine zweite Subtraktionsuntereinheit, die konfiguriert ist, eine entsprechende theoretische optische Einzelwellenausgangsleistung, die durch Verwenden des theoretischen Modells berechnet wird, von der tatsächlichen optischen Einzelwellenausgangsleistung eines Erbium-dotierten Faserverstärkers, EDFA, der durch eine Überwachungseinheit für optische Leistung, OPM, überwacht wird, zu subtrahieren, um einen Differenzwert zwischen der tatsächlichen optischen Ausgangsleistung und der theoretischen optischen Ausgangsleistung jeder Einzelwelle zu erhalten;

eine zweite Vergleichsuntereinheit, die konfiguriert ist, einen Differenzwert zwischen der tatsächlichen optischen Leistung und der theoretischen optischen Leistung jeder Einzelwelle mit einem voreingestellten Schwellenwert zu vergleichen;

eine vierte Modifikationsuntereinheit, die konfiguriert ist: in einem Fall, wenn wenigstens einer der Differenzwerte größer ist als der Schwellenwert, die theoretische optische Einzelwelleneingangsleistung des EDFA in dem theoretischen Modell zu modifizieren; und

eine Verlustmodifikationsuntereinheit, die konfiguriert ist, die modifizierte theoretische optische Einzelwelleneingangsleistung des EDFA zu verwenden, um einen Verbindungsstreckenverlust eines Sendeendes der Verbindungsstrecke eines optischen Netzes in dem theoretischen Modell zu modifizieren, wobei der Verbindungsstreckenverlust eines Sendeendes ein Verbindungsstreckenverlust zwischen einem Laser in dem Sendeende und dem EDFA ist.

9. Vorrichtung (80) zum Erhalten eines Leistungsparameters einer Verbindungsstrecke eines optischen Netzes nach Anspruch 8, wobei die Modifikationseinheit (83) Folgendes umfasst:

eine erste Modifikationsuntereinheit, die konfiguriert ist, die tatsächliche optische Gesamteingangsleistung eines ersten Verstärkers der Verbindungsstrecke eines optischen Netzes zu verwenden, um die theoretische optische Einzelwelleneingangsleistung des ersten Verstärkers zu modifizieren; und

eine zweite Modifikationsuntereinheit, die konfiguriert ist, die modifizierte theoretische optische Einzelwelleneingangsleistung zu verwenden, um einen Verbindungsstreckenverlust eines Sendeendes der Verbindungsstrecke eines optischen Netzes in dem theoretischen Modell zu modifizieren.

10. Vorrichtung (80) zum Erhalten eines Leistungsparameters einer Verbindungsstrecke eines optischen Netzes nach Anspruch 8, wobei die Modifikationseinheit (83) Folgendes umfasst:

eine erste Subtraktionsuntereinheit, die konfiguriert ist, die theoretische optische Gesamtausgangsleistung, die durch Verwenden des theoretischen Modells berechnet wird, von der tatsächlichen optischen Gesamtausgangsleistung des EDFA, die durch den EDFA überwacht wird, zu subtrahieren, um einen Differenzwert zu erhalten;

eine Additionsuntereinheit, die konfiguriert ist, den Differenzwert zu der theoretischen optischen Ausgangsleistung zu addieren, um die modifizierte theoretische optische Gesamtausgangsleistung zu erhalten; eine Erfassungsuntereinheit für modifizierte Verstärkung, die konfiguriert ist, eine modifizierte Verstärkung des EDFA unter Verwendung der theoretischen optischen Gesamteingangsleistung des EDFA und der modifizierten theoretischen optischen Gesamtausgangsleistung zu erhalten; und eine Ersetzungsuntereinheit, die konfiguriert ist, eine ursprüngliche Verstärkung des EDFA in dem theoretischen Modell durch die modifizierte Verstärkung zu ersetzen.

11. Vorrichtung (80) zum Erhalten eines Leistungsparameters einer Verbindungsstrecke eines optischen Netzes nach Anspruch 8, wobei die Modifikationseinheit (83) Folgendes umfasst:

eine erste Vergleichsuntereinheit, die konfiguriert ist, die tatsächliche optische Gesamteingangsleistung, die durch den EDFA überwacht wird, mit der theoretischen optischen Gesamteingangsleistung, die durch Verwenden des theoretischen Modells berechnet wird, zu vergleichen; und eine dritte Modifikationsuntereinheit, die konfiguriert ist: in einem Fall, wenn die tatsächliche optische Gesamteingangsleistung und die theoretische optische Gesamteingangsleistung inkonsistent sind, Modifikation auf der theoretischen optischen Gesamteingangsleistung auszuführen und die modifizierte theoretische optische Gesamteingangsleistung und die theoretische optische Gesamtausgangsleistung, die durch einen vorherigen EDFA modifiziert wird, zu verwenden, um Modifikation auf einem VOA-Verlust oder einem Verlust einer Abstandskomponente zwischen dem EDFA und dem vorherigen EDFA in dem theoretischen Modell auszuführen.

12. Vorrichtung (80) zum Erhalten eines Leistungsparameters einer Verbindungsstrecke eines optischen Netzes nach Anspruch 8, wobei die Modifikationseinheit (83) Folgendes umfasst:

eine Gesamtverstärkungserhalteuntereinheit, die konfiguriert ist, die tatsächliche optische Gesamteingangsleistung, die durch den EDFA überwacht wird, von einer Summe tatsächlicher optischer Einzelwellenausgangsleistung des EDFA, die durch die OPM überwacht wird, zu subtrahieren, um eine Gesamtverstärkung des EDFA zu erhalten; und eine Gesamtverstärkungsmodifikationsuntereinheit, die konfiguriert ist, eine Gesamtverstärkung des EDFA in dem theoretischen Modell durch die erhaltene Gesamtverstärkung zu ersetzen.

13. Vorrichtung (80) zum Erhalten eines Leistungsparameters einer Verbindungsstrecke eines optischen Netzes nach Anspruch 8, wobei die Modifikationseinheit (83) ferner Folgendes umfasst:

eine dritte Subtraktionsuntereinheit, die konfiguriert ist, den Differenzwert zwischen der tatsächlichen optischen Ausgangsleistung und der theoretischen optischen Ausgangsleistung jeder Einzelwelle zu jedem Abstand eines optischen Multiplexerabschnitts, in dem sich die OPM befindet, auf eine gemittelte Weise oder eine gewichtete gemittelte Weise zuzuweisen, um dementsprechend einen Verbindungsstreckenverlust jedes Abstands in dem theoretischen Modell zu modifizieren; und eine fünfte Modifikationsuntereinheit, die konfiguriert ist, das modifizierte theoretische Modell zu verwenden, um die theoretische optische Ausgangsleistung jeder Einzelwelle neu zu berechnen, um einen neuen Differenzwert zwischen der tatsächlichen optischen Ausgangsleistung und der theoretischen optischen Ausgangsleistung jeder Einzelwelle zu erhalten, bis der Differenzwert kleiner als der Schwellenwert ist.

14. Vorrichtung (80) zum Erhalten eines Leistungsparameters einer Verbindungsstrecke eines optischen Netzes nach Anspruch 8, wobei die Modifikationseinheit (83) ferner Folgendes umfasst:

eine vierte Subtraktionsuntereinheit, die konfiguriert ist, die theoretische optische Gesamtausgangsleistung, die durch das theoretische Modell erhalten wird, von einer Summe tatsächlicher optischer Einzelwellenausgangsleistung, die durch eine letzte OPM in einem optischen Multiplexerabschnitt, wo sich die OPM befindet, überwacht wird, zu subtrahieren, um einen Differenzwert einer gemultiplexten Welle zu erhalten; eine sechste Modifikationsuntereinheit, die konfiguriert ist, den Differenzwert der gemultiplexten Welle zu verwenden, um Modifikation auf einer Verstärkung des EDFA des optischen Multiplexerabschnitts, wo sich die OPM befindet, auf eine gemittelte Weise oder eine gewichtete gemittelte Weise auszuführen; eine fünfte Subtraktionsuntereinheit, die konfiguriert ist, die theoretische optische Einzelwellenausgangsleistung, die durch Verwenden des theoretischen Modells berechnet wird, von der tatsächlichen optischen Einzelwellenausgangsleistung, die durch die letzte OPM überwacht wird, zu subtrahieren, um einen Einzelwellendifferenzwert zu erhalten;

**EP 2 717 496 B1**

eine sechste Subtraktionsuntereinheit, die konfiguriert ist, den Einzelwellendifferenzwert von dem Differenzwert der gemultiplexten Welle zu subtrahieren, um einen Abweichungswert zu erhalten;
eine dritte Vergleichsuntereinheit, die konfiguriert ist, den Abweichungswert mit dem voreingestellten Schwellenwert zu vergleichen; und
eine siebte Modifikationsuntereinheit, die konfiguriert ist: in einem Fall, wenn der Abweichungswert größer ist als der Schwellenwert, den Abweichungswert zu verwenden, um einen Verbindungsstreckenverlust in dem optischen Multiplexerabschnitt, wo sich die OPM befindet, auf eine gemittelte Weise oder eine gewichtete gemittelte Weise zu modifizieren, bis der Abweichungswert kleiner als der Schwellenwert ist.

**Revendications**

1. Procédé d'obtention d'un paramètre de performance d'une liaison de réseau optique, comprenant :

l'acquisition d'une puissance optique réelle à chaque point de surveillance d'une liaison de réseau optique par mesure ;
l'acquisition en correspondance d'une puissance optique théorique de chaque point de surveillance calculée à l'aide d'un modèle théorique ;
l'exécution d'une modification sur au moins un paramètre d'un gain d'amplificateur et d'une perte de liaison de la liaison de réseau optique dans le modèle théorique à l'aide de la puissance optique réelle et de la puissance optique théorique correspondante de chaque point de surveillance ; et
l'obtention d'une valeur de paramètre de performance de chaque noeud dans la liaison de réseau optique à partir du modèle théorique modifié ;

l'exécution de la modification sur au moins un paramètre d'un gain d'amplificateur et d'une perte de liaison de la liaison de réseau optique dans le modèle théorique à l'aide de la puissance optique réelle et de la puissance optique théorique correspondante de chaque point de surveillance comprenant :

la soustraction d'une puissance optique de sortie d'onde unique théorique correspondante calculée à l'aide du modèle théorique de la puissance optique de sortie d'onde unique réelle d'un amplificateur à fibre dopée erbium, EDFA, surveillée par un module de surveillance de performances optiques, OPM, pour obtenir une valeur de différence entre une puissance optique de sortie réelle et une puissance optique de sortie théorique de chaque onde unique ;
la comparaison d'une valeur de différence entre une puissance optique réelle et une puissance optique théorique de chaque onde unique à une valeur seuil prédéfinie ;
dans un cas où au moins l'une des valeurs de différence est supérieure à la valeur seuil, la modification d'une puissance optique d'entrée d'onde unique théorique de l'EDFA dans le modèle théorique ; et
l'utilisation de la puissance optique d'entrée d'onde unique théorique modifiée de l'EDFA pour modifier une perte de liaison d'une extrémité de transmission de la liaison de réseau optique dans le modèle théorique, la perte de liaison d'une extrémité de transmission étant une perte de liaison entre un laser à l'extrémité de transmission et l'EDFA.

2. Procédé d'obtention d'un paramètre de performance d'une liaison de réseau optique selon la revendication 1, dans lequel l'exécution d'une modification sur au moins un paramètre d'un gain d'amplificateur et d'une perte de liaison de la liaison de réseau optique dans le modèle théorique à l'aide de la puissance optique réelle et de la puissance optique théorique correspondante de chaque point de surveillance comprend :

l'utilisation d'une puissance optique d'entrée totale réelle d'un premier amplificateur sur la liaison de réseau optique pour modifier la puissance optique d'entrée d'onde unique théorique du premier amplificateur ; et
l'utilisation de la puissance optique d'entrée d'onde unique théorique modifiée pour modifier une perte de liaison d'une extrémité de transmission de la liaison de réseau optique dans le modèle théorique.

3. Procédé d'obtention d'un paramètre de performance d'une liaison de réseau optique selon la revendication 1, dans lequel l'exécution d'une modification sur au moins un paramètre d'un gain d'amplificateur et d'une perte de liaison de la liaison de réseau optique dans le modèle théorique à l'aide de la puissance optique réelle et de la puissance optique théorique correspondante de chaque point de surveillance comprend :

la soustraction d'une puissance optique de sortie totale théorique calculée à l'aide du modèle théorique d'une

23

puissance optique de sortie totale réelle de l'EDFA surveillée par l'EDFA, pour obtenir une valeur de différence ;

l'ajout de la valeur de différence à la puissance optique de sortie théorique, pour obtenir une puissance optique de sortie totale théorique modifiée ;

l'obtention d'un gain modifié de l'EDFA à l'aide de la puissance optique d'entrée totale théorique de l'EDFA et de la puissance optique de sortie totale théorique modifiée ; et

le remplacement d'un gain d'origine de l'EDFA dans le modèle théorique par le gain modifié.

4. Procédé d'obtention d'un paramètre de performance d'une liaison de réseau optique selon la revendication 1, dans lequel l'exécution d'une modification sur au moins un paramètre d'un gain d'amplificateur et d'une perte de liaison de la liaison de réseau optique dans le modèle théorique à l'aide de la puissance optique réelle et de la puissance optique théorique correspondante de chaque point de surveillance comprend :

la comparaison d'une puissance optique d'entrée totale réelle surveillée par l'EDFA à une puissance optique d'entrée totale théorique calculée à l'aide du modèle théorique ; et

dans un cas où la puissance optique d'entrée totale réelle et la puissance optique d'entrée totale théorique sont en contradiction, l'exécution d'une modification sur la puissance optique d'entrée totale théorique, et l'utilisation de la puissance optique d'entrée totale théorique modifiée et de la puissance optique de sortie totale théorique modifiée par un EDFA précédent pour exécuter une modification sur une perte de VOA ou sur une perte d'une composante de tronçon entre l'EDFA et l'EDFA précédent dans le modèle théorique.

5. Procédé d'obtention d'un paramètre de performance d'une liaison de réseau optique selon la revendication 1, dans lequel l'exécution d'une modification sur au moins un paramètre d'un gain d'amplificateur et d'une perte de liaison de la liaison de réseau optique dans le modèle théorique à l'aide de la puissance optique réelle et de la puissance optique théorique correspondante de chaque point de surveillance comprend :

la soustraction d'une puissance optique d'entrée totale réelle surveillée par l'EDFA d'une somme de puissance optique de sortie d'onde unique réelle de l'EDFA surveillée par l'OPM, pour obtenir un gain total de l'EDFA ; et

le remplacement d'un gain total de l'EDFA dans le modèle théorique par le gain total obtenu.

6. Procédé d'obtention d'un paramètre de performance d'une liaison de réseau optique selon la revendication 1, dans lequel l'exécution d'une modification sur au moins un paramètre d'un gain d'amplificateur et d'une perte de liaison de la liaison de réseau optique dans le modèle théorique à l'aide de la puissance optique réelle et de la puissance optique théorique correspondante de chaque point de surveillance comprend :

l'allocation de la valeur de différence entre la puissance optique de sortie réelle et la puissance optique de sortie théorique de chaque onde unique à chaque tronçon d'une section de multiplexeur optique dans laquelle l'OPM est situé selon une moyenne ou une moyenne pondérée, de façon à modifier en correspondance une perte de liaison de chaque tronçon dans le modèle théorique ; et

l'utilisation du modèle théorique modifié pour recalculer la puissance optique de sortie théorique de chaque onde unique, de façon à obtenir une nouvelle valeur de différence entre la puissance optique de sortie réelle et la puissance optique de sortie théorique de chaque onde unique, jusqu'à ce que la valeur de différence soit inférieure à la valeur seuil.

7. Procédé d'obtention d'un paramètre de performance d'une liaison de réseau optique selon la revendication 1, dans lequel l'exécution d'une modification sur au moins un paramètre d'un gain d'amplificateur et d'une perte de liaison de la liaison de réseau optique dans le modèle théorique à l'aide de la puissance optique réelle et de la puissance optique théorique correspondante de chaque point de surveillance comprend :

la soustraction d'une puissance optique de sortie totale théorique obtenue par le modèle théorique d'une somme de puissance optique de sortie d'onde unique réelle surveillée par un dernier OPM dans une section de multiplexeur optique dans laquelle l'OPM est situé, pour obtenir une valeur de différence d'onde multiplexée ;

l'utilisation de la valeur de différence d'onde multiplexée pour effectuer une modification sur un gain de l'EDFA de la section de multiplexeur optique dans laquelle l'OPM est situé selon une moyenne ou une moyenne pondérée ;

la soustraction d'une puissance optique de sortie d'onde unique théorique calculée à l'aide du modèle théorique de la puissance optique de sortie d'onde unique réelle surveillée par le dernier OPM, pour obtenir une valeur de différence d'onde unique ;

la soustraction de la valeur de différence d'onde unique de la valeur de différence d'onde multiplexée, pour obtenir une valeur d'écart ;

la comparaison de la valeur d'écart à la valeur seuil prédéfinie ; et

dans un cas dans lequel la valeur d'écart est supérieure à la valeur seuil, l'utilisation de la valeur de déviation pour modifier une perte de liaison dans la section de multiplexeur optique dans laquelle l'OPM est situé selon une moyenne ou une moyenne pondérée, jusqu'à ce que la valeur d'écart soit inférieure à la valeur seuil.

**8.** Appareil (80) pour obtenir un paramètre de performance d'une liaison de réseau optique, comprenant :

une unité d'acquisition de valeur réelle (81), configurée pour acquérir une puissance optique réelle à chaque point de surveillance d'une liaison de réseau optique par mesure ;

une unité d'acquisition de valeur théorique (82), configurée pour acquérir une puissance optique théorique de chaque point de surveillance calculée à l'aide d'un modèle théorique ;

une unité de modification (83), configurée pour exécuter une modification sur au moins un paramètre d'un gain d'amplificateur et d'une perte de liaison de la liaison de réseau optique dans le modèle théorique à l'aide de la puissance optique réelle et de la puissance optique théorique correspondante de chaque point de surveillance ; et

une unité d'acquisition de paramètre de performance (84), configurée pour obtenir une valeur de paramètre de performance de chaque noeud dans la liaison de réseau optique à partir du modèle théorique modifié ;

l'unité de modification (83) comprenant :

une deuxième sous-unité de soustraction, configurée pour soustraire une puissance optique de sortie d'onde unique théorique correspondante calculée à l'aide du modèle théorique d'une puissance optique de sortie d'onde unique réelle d'un amplificateur à fibre dopée erbium, EDFA, surveillée par un module de surveillance de performances optiques, OPM, pour obtenir une valeur de différence entre une puissance optique de sortie réelle et une puissance optique de sortie théorique de chaque onde unique ;

une deuxième sous-unité de comparaison, configurée pour comparer une valeur de différence entre une puissance optique réelle et une puissance optique théorique de chaque onde unique à une valeur seuil prédéfinie ;

une quatrième sous-unité de modification, configurée pour : dans un cas où au moins l'une des valeurs de différence est supérieure à la valeur seuil, modifier une puissance optique d'entrée d'onde unique théorique de l'EDFA dans le modèle théorique ; et

une sous-unité de modification de perte, configurée pour utiliser la puissance optique d'entrée d'onde unique théorique modifiée de l'EDFA pour modifier une perte de liaison d'une extrémité de transmission de la liaison de réseau optique dans le modèle théorique, la perte de liaison d'une extrémité de transmission étant une perte de liaison entre un laser à l'extrémité de transmission et l'EDFA.

**9.** Appareil (80) pour obtenir un paramètre de performance d'une liaison de réseau optique selon la revendication 8, dans lequel l'unité de modification (83) comprend :

une première sous-unité de modification, configurée pour utiliser une puissance optique d'entrée totale réelle d'un premier amplificateur dans la liaison de réseau optique pour modifier une puissance optique d'entrée d'onde unique théorique du premier amplificateur ; et

une deuxième sous-unité de modification, configurée pour utiliser la puissance optique d'entrée d'onde unique théorique modifiée pour modifier une perte de liaison d'une extrémité de transmission de la liaison de réseau optique dans le modèle théorique.

**10.** Appareil (80) pour obtenir un paramètre de performance d'une liaison de réseau optique selon la revendication 8, dans lequel l'unité de modification (83) comprend :

une première sous-unité de soustraction, configurée pour soustraire une puissance optique de sortie totale théorique calculée à l'aide du modèle théorique d'une puissance optique de sortie totale réelle de l'EDFA surveillée par l'EDFA, pour obtenir une valeur de différence ;

une sous-unité d'addition, configurée pour ajouter la valeur de différence à la puissance optique de sortie théorique, pour obtenir une puissance optique de sortie totale théorique modifiée ;

une sous-unité d'acquisition de gain modifié, configurée pour obtenir un gain modifié de l'EDFA à l'aide d'une puissance optique d'entrée totale théorique de l'EDFA et de la puissance optique de sortie totale théorique modifiée ; et

une sous-unité de remplacement, configurée pour remplacer un gain d'origine de l'EDFA dans le modèle théorique par le gain modifié.

11. Appareil (80) pour obtenir un paramètre de performance d'une liaison de réseau optique selon la revendication 8, dans lequel l'unité de modification (83) comprend :

une première sous-unité de comparaison, configurée pour comparer une puissance optique d'entrée totale réelle surveillée par l'EDFA à une puissance optique d'entrée totale théorique calculée à l'aide du modèle théorique ; et
une troisième sous-unité de modification, configurée pour : dans un cas où la puissance optique d'entrée totale réelle et la puissance optique d'entrée totale théorique sont en contradiction, exécuter une modification sur la puissance optique d'entrée totale théorique, et utiliser la puissance optique d'entrée totale théorique modifiée et la puissance optique de sortie totale théorique modifiée par un EDFA précédent pour exécuter une modification sur une perte de VOA ou sur une perte d'une composante de tronçon entre l'EDFA et l'EDFA précédent dans le modèle théorique.

12. Appareil (80) pour obtenir un paramètre de performance d'une liaison de réseau optique selon la revendication 8, dans lequel l'unité de modification (83) comprend :

une sous-unité d'obtention de gain total, configurée pour soustraire une puissance optique d'entrée totale réelle surveillée par l'EDFA d'une somme de puissance optique de sortie d'onde unique réelle de l'EDFA surveillée par l'OPM, pour obtenir un gain total de l'EDFA ; et
une sous-unité de modification de gain total, configurée pour remplacer un gain total de l'EDFA dans le modèle théorique par le gain total obtenu.

13. Appareil (80) pour obtenir un paramètre de performance d'une liaison de réseau optique selon la revendication 8, dans lequel l'unité de modification (83) comprend en outre :

une troisième sous-unité de soustraction, configurée pour allouer la valeur de différence entre la puissance optique de sortie réelle et la puissance optique de sortie théorique de chaque onde unique à chaque tronçon d'une section de multiplexeur optique dans laquelle l'OPM est situé selon une moyenne ou une moyenne pondérée, de façon à modifier en correspondance une perte de liaison de chaque tronçon dans le modèle théorique ; et
une cinquième sous-unité de modification, configurée pour utiliser le modèle théorique modifié pour recalculer la puissance optique de sortie théorique de chaque onde unique, de façon à obtenir une nouvelle valeur de différence entre la puissance optique de sortie réelle et la puissance optique de sortie théorique de chaque onde unique, jusqu'à ce que la valeur de différence soit inférieure à la valeur seuil.

14. Appareil (80) pour obtenir un paramètre de performance d'une liaison de réseau optique selon la revendication 8, dans lequel l'unité de modification (83) comprend en outre :

une quatrième sous-unité de soustraction, configurée pour soustraire une puissance optique de sortie totale théorique obtenue par le modèle théorique d'une somme de puissance optique de sortie d'onde unique réelle surveillée par un dernier OPM dans une section de multiplexeur optique dans laquelle l'OPM est situé, pour obtenir une valeur de différence d'onde multiplexée ;
une sixième sous-unité de modification, configurée pour utiliser la valeur de différence d'onde multiplexée pour effectuer une modification sur un gain de l'EDFA de la section de multiplexeur optique dans laquelle l'OPM est situé selon une moyenne ou une moyenne pondérée ;
une cinquième sous-unité de soustraction, configurée pour soustraire une puissance optique de sortie d'onde unique théorique calculée à l'aide du modèle théorique de la puissance optique de sortie d'onde unique réelle surveillée par le dernier OPM, pour obtenir une valeur de différence d'onde unique ;
une sixième sous-unité de soustraction, configurée pour soustraire la valeur de différence d'onde unique de la valeur de différence d'onde multiplexée, pour obtenir une valeur d'écart ;
une troisième sous-unité de comparaison, configurée pour comparer la valeur d'écart à la valeur seuil prédéfinie ; et
une septième sous-unité de modification, configurée pour : dans un cas dans lequel la valeur d'écart est supérieure à la valeur seuil, utiliser la valeur de déviation pour modifier une perte de liaison dans la section de multiplexeur optique dans laquelle l'OPM est situé selon une moyenne ou une moyenne pondérée, jusqu'à ce que la valeur d'écart soit inférieure à la valeur seuil.

Acquire actual optical power from each monitoring point of an optical network link — 11

Correspondingly acquire theoretical optical power of each monitoring point calculated with a theoretical model — 12

Perform modification on the theoretical model by using the actual optical power and the corresponding theoretical optical power of each monitoring point — 13

Obtain a performance parameter value of each node in the optical network link from the modified theoretical model — 14

FIG. 1

FIG. 2

FIG. 3

FIG. 4

Start

Acquire actual single-wave output optical power monitored
by an OPM1                                                    51

Obtain theoretical single-wave input optical power of an
EDFA1                                                         52

Obtain theoretical single-wave output optical power of the
EDFA1                                                         53

Whether a difference value between
each theoretical single-wave output
optical power and an actual value
monitored by the OPM satisfies a
threshold?                              54          No

Yes

Obtain accurate theoretical single-wave input optical power of
the EDFA1                                                     55

End

FIG. 5

```
                    ┌──────────┐
                    │  Start   │
                    └────┬─────┘
                         │
                         ▼
        ┌────────────────────────────────────┐  61
        │ Acquire actual single-wave output  │ ╱
        │   optical power monitored by an    │
        │              OPM2                  │
        └────────────────┬───────────────────┘
                         │                    ◄─────────────┐
                         ▼                                  │
        ┌────────────────────────────────────┐  62          │
        │ Obtain theoretical single-wave     │ ╱            │
        │ output optical power of an EDFA3    │             │
        └────────────────┬───────────────────┘             │
                         │                                  │
                         ▼                                  │
                    ╱◄───────►╲     63                      │
                  ╱             ╲  ╱                         │
                ╱  Whether a     ╲                          │
               ╱ difference value ╲        No               │
              ╱ between each       ╲──────────────┐         │
             ╱ theoretical single-  ╲             ▼         │
             ╲ wave output optical   ╱    ┌──────────────┐  │
              ╲ power and an actual  ╱  64 │ Perform      │  │
               ╲ value monitored by ╱  ╱  │ modification │  │
                ╲ the OPM2         ╱      │ on a         │  │
                 ╲ satisfies a    ╱       │ component    │  │
                  ╲ threshold?   ╱        │ parameter of │  │
                   ╲           ╱          │ each span in │──┘
                    ╲◄───────►╱           │ an OMS1 in   │
                         │                │ the theoret- │
                         │ Yes            │ ical model   │
                         ▼                └──────────────┘
        ┌────────────────────────────────────┐  65
        │ Obtain accurate theoretical        │ ╱
        │ single-wave output optical power   │
        │ of the EDFA3                       │
        └────────────────┬───────────────────┘
                         │
                         ▼
                    ┌──────────┐
                    │   End    │
                    └──────────┘
```

FIG. 6

$\Delta$ P

$\lambda$1    $\lambda$N    $\lambda$

FIG. 7

```
Monitoring
apparatus,
device or        Optical network        Theoretical
meter                                      model
```

81                    83                    82                    80

```
Actual value                                Theoretical
acquiring       Modification                  value
unit               unit                     acquiring
                                              unit
```

84

```
Performance
parameter
acquiring
unit
```

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004052526 A1
- US 2009214204 A1

- US 2002114062 A1